(19)

**Europäisches Patentamt**
**European Patent Office**
**Office européen des brevets**

(11)  **EP 4 386 224 B1**

(12)  ## EUROPÄISCHE PATENTSCHRIFT

(45) Veröffentlichungstag und Bekanntmachung des Hinweises auf die Patenterteilung:
**29.07.2026  Patentblatt 2026/31**

(21) Anmeldenummer: **23216751.0**

(22) Anmeldetag: **14.12.2023**

(51) Internationale Patentklassifikation (IPC):
***F16C 32/04*** *(2006.01)*

(52) Gemeinsame Patentklassifikation (CPC):
**F16C 32/048; F16C 32/0461;** F16C 32/0465;
F16C 2300/02

(54)  **AKTIVES MAGNETLAGER MIT REDUZIERTER VERLUSTLEISTUNG**

ACTIVE MAGNETIC BEARING WITH REDUCED POWER DISSIPATION

PALIER MAGNÉTIQUE ACTIF À DISSIPATION DE PUISSANCE RÉDUITE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **14.12.2022  DE 102022213675**

(43) Veröffentlichungstag der Anmeldung:
**19.06.2024  Patentblatt 2024/25**

(73) Patentinhaber:
• **Deutsches Zentrum für Luft- und Raumfahrt e.V.**
**53227 Bonn (DE)**
• **Hochschule für Technik und Wirtschaft Berlin**
**10318 Berlin (DE)**

(72) Erfinder:
• **Lang, Matthias**
**13158 Berlin (DE)**
• **Köhler, Bert-Uwe**
**14612 Falkensee (DE)**

(74) Vertreter: **Obst, Bernhard**
**Patentanwälte Bressel und Partner mbB**
**Postdamer Platz 10**
**10785 Berlin (DE)**

(56) Entgegenhaltungen:
EP-A1- 1 411 255       WO-A1-2014/048464
DE-A1- 19 842 522      DE-A1- 2 338 307
US-A1- 2017 288 476    US-A1- 2021 013 771
US-B1- 6 194 800       US-B1- 6 885 127
US-B2- 7 579 723

**Beschreibung**

Die Erfindung betriff ein aktives Magnetlager und ein Verfahren zu dessen Herstellung.

**Hintergrund der Erfindung**

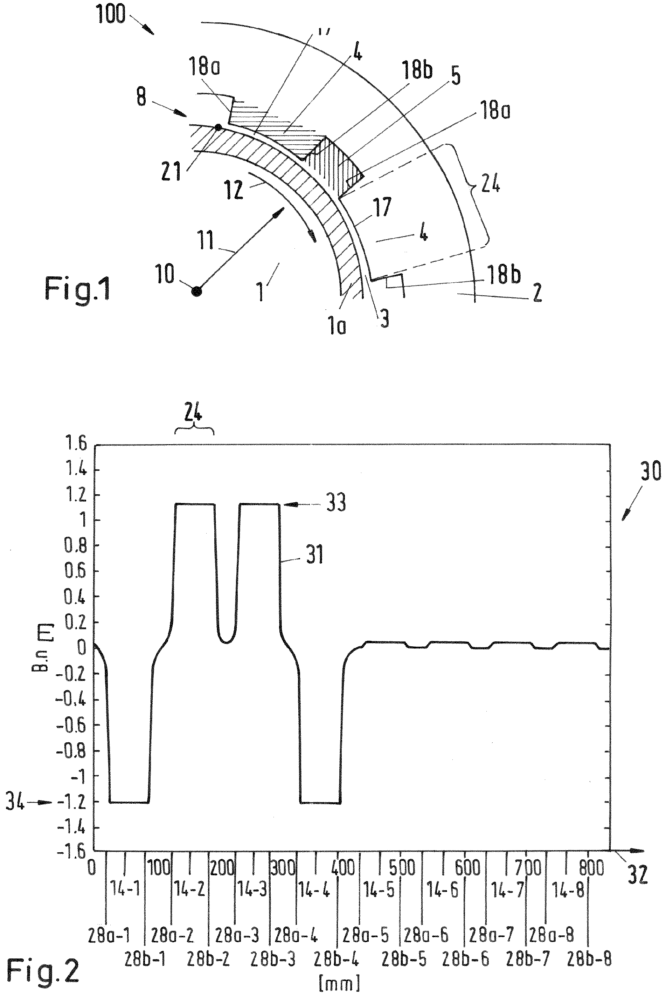

Ein aktives Magnetlager (AMB - active magnetic bearing) nach dem Stand der Technik wird im Zusammenhang mit Fig. 1 erläutert. Das aktive Magnetlager 100 wird genutzt, um einen zum Drehen ausgebildeten Rotor 1 schweben zu lassen, so dass eine Drehbewegung des Rotors 1 um eine Rotationsachse 10 ohne mechanischen Kontakt zu einer Lagervorrichtung erfolgen kann. Die Drehbewegung des Rotors 1 ist damit im Vergleich zu beispielsweise mit Gleit- oder Kugellagern gelagerten Rotoren reibungsarm. Zugleich können durch geregelte Krafteinleitung Schwingungen minimiert werden, so dass ein Betrieb auch bei kritischen Drehzahlen möglich ist.

Das aktive Magnetlager umfasst einen Stator 2 und einen auf dem Rotor 1 befestigten Abschnitt, der in der Regel magnetisch leitfähige Bleche umfasst und deshalb auch als Rotorblechpaket 1a bezeichnet wird. Das Rotorblechpaket 1a ist auf dem Rotor 1 dem Stator 2 gegenüberliegend, d.h. in einer Rotoraufnahme 8 angeordnet. Das Rotorblechpaket kann als Teil des Rotors 1 betrachtet werden.

Der Stator 2 umfasst einen Polzahn 4, der zum Leiten einer magnetischen Flussdichte ausgebildet ist. Ein mit der magnetischen Flussdichte verbundener magnetischer Fluss resultiert aus der Integration einer Normalkomponente der magnetischen Flussdichte über eine Fläche, durch die die magnetische Flussdichte hindurchtritt. Der magnetische Fluss wird durch den Polzahn 4 in einer im Wesentlichen radialen Richtung 11 geleitet, wobei die radiale Richtung 11 senkrecht zur Rotationsachse 10 definiert ist. Der magnetische Fluss kann im Betrieb des AMB vom Polzahn 4 durch einen Spalt 3 in das Rotorblechpaket 1a eintreten. Im Querschnitt besitzt der Polzahn 4 eine im Wesentlichen trapezförmige Gestalt, wobei die dem Rotor 1 zugewandte Seite, hier als Polzahnfläche 17 bezeichnet, der Rotorkontur folgt und zum Rotor 1 bzw. zum Rotorblechpaket 1a durch den Spalt 3 beabstandet ist.

In einer Umfangsrichtung 12 benachbart zum Polzahn 4 ist eine Pollücke 5 angeordnet. Die Pollücke 5 dient nicht dem Leiten des magnetischen Flusses in der radialen Richtung 11. Im Allgemeinen umfasst die Pollücke 5 einen Hohlraum, in den eine Wicklung einer Spule eingelegt ist. Der magnetische Fluss in der radialen Richtung 11 ist im Bereich der Pollücke 5 betragsmäßig kleiner als im Bereich des Polzahns 4 und kann in der Pollücke 5 auch ganz verschwinden.

Bei Drehung des Rotors 1 überstreicht ein Rotorpunkt 21 auf und/oder in der Nähe der Oberfläche des Rotorblechpakets 1a im Bereich des Polzahns 4 ein Gebiet mit großer radialer magnetischer Flussdichte und im Bereich der Pollücke ein Gebiet mit geringerer (als am Polzahn) und/oder keiner radialer magnetischer Flussdichte. Aufgrund der Änderung der radialen magnetischen Flussdichte, die der Rotorpunkt 21 auf dem Rotorblechpaket beim Wechsel von Polzahn 4 zu Pollücke 5 oder von Pollücke 5 zu Polzahn 4 erfährt, wird in dem Rotorpunkt 21 ein Strom, der als Wirbelstrom benannt ist, erzeugt. Ein Fließen des Wirbelstroms führt zu einer Verlustleistung im Rotorblechpaket (1a) oder allgemein im Rotor (1) und damit zu dessen Erwärmung, die unerwünscht ist und im Allgemeinen eine Kühlung, ggf. aktive Kühlung, erfordert.

Der Betrag der Verlustleistung im Rotorblechpaket 1a oder allgemein im Rotor ist eine Funktion der zeitlichen Änderung des magnetischen Flusses oder genauer der magnetischen Flussdichte, beispielsweise der radialen magnetischen Flussdichte, die der Rotorpunkt 21 erfährt.

Die US 5,142,175 A beschäftigt sich mit der Verringerung von Wirbelströmen. Die Druckschrift beschreibt ein System zum Tragen eines Rotors ohne Kontakt mit einem Stator, das eine magnetische Lagervorrichtung, die auf dem Stator montiert ist und ein steuerbares Magnetmittel, das am Stator befestigt ist, einen nicht steuerbaren Magnetpol, der am Stator befestigt ist, einen Vormagnetisierungsmagnetpol, der zwischen dem steuerbaren Magneten und dem nicht steuerbaren Magnetpol angeordnet ist, und einen Rotormagnetpol, der am Rotor befestigt ist, umfasst, um zu ermöglichen, dass der magnetische Pfad eines Vormagnetisierungsflusses in einer Ebene verläuft, die die Längsachse des Stators einschließt. Der nicht steuerbare Magnetpol und der Rotormagnetpol können einander zugewandte Zähne haben.

EP 2 148 103 A1 beschreibt ein magnetisches Radiallager zur berührungslosen Lagerung einer Rotorwelle. Die Druckschrift ist mit dem besonders einfachen, konstruktiven Aufbau eines magnetischen Lagersystems befasst. Das magnetische Radiallager weist einen Drehfeldmaschinenstator mit einer Anzahl n von in Umfangrichtung verteilt angeordneten Statornuten und einer gleichen Anzahl n von dazwischenliegenden Statorzähnen auf. Die Statornuten sind mit einer mehrphasigen Statorwicklung zur Erzeugung eines magnetischen Drehfeldes bewickelt. Es ist an jedem radialen Ende der Statorzähne ein axial verlaufender, streifen- oder plattenförmiger Permanentmagnet angeordnet, wobei die Permanentmagnete eine in Umfangrichtung abwechselnde, radiale Magnetisierungsrichtung aufweisen.

DE 2 338 307 A1 beschreibt einen elektromagnetischen Antrieb für Drehkörper bestehend aus einem ruhenden Teil, der mindestens zwei Magnetspulen aufweist, und aus einem umlaufenden Teil mit magnetisierbarem Material, wobei zusätzlich zur für den Antrieb des umlaufenden Teils dienenden Ansteuerung der Magnetspulen diese oder Teile von deren Wicklungen auch von einer Regeleinrichtung angesteuert werden, welche mit einem Messsystem verknüpft ist, das die radiale Lage des Drehkörpers erfasst.

Die US 6,885,127 B1 beschreibt einen Stator für einen Kfz-Generator. Der Stator enthält einen Statorkern, in dem eine Vielzahl von Schlitzen an seinem inneren Umfang ausgebildet ist, und Statorspulen, die in die Schlitze eingepasst sind, und einen Rotor, der innerhalb des Stators so vorgesehen ist, dass er sich drehen kann, einschließlich einer Rotorspule zum Fließen eines Stroms, um einen magnetischen Fluss zu erzeugen, und eines Polkerns zum Aufnehmen der Rotorspule und zum Ausbilden einer Vielzahl von klauenförmigen Magnetpolen in Übereinstimmung mit dem magnetischen Fluss. Für jeden Satz von Statorspulen sind zwei Schlitze vorgesehen, wobei jede Phase und jeder Magnetpol und die Gesamtzahl der Schlitze zweiundsiebzig oder mehr beträgt, und wobei der Statorkern so beschaffen ist, dass eine Vielzahl von blechförmigen magnetischen Elementen mit einer Vielzahl von Zähnen, die die Schlitze an einer Seite eines Jochs strukturieren, laminiert sind, wobei die Statorspulen in den Schlitzen angeordnet sind und der Statorkern so abgerundet ist, dass die Statorspulen zu seiner Innenseite werden und seine beiden Endflächen kontaktiert werden, um den Statorkern in einer Ringform zu verbinden.

Auf der stationären Seite eines aus mehreren Magnetpolen aufgebauten Radiallagers sind in der US 6,194,800 B1 die Magnetpole in einer solchen Form geformt, dass sich die magnetische Flussdichteverteilung zwischen den Innenflächen dieser Magnetpole und einem Rotor, der sich auf der rotierenden Seite befindet, ausbildet Das Radiallager weist eine Verteilung auf, die vom Endabschnitt des Magnetpols zum Mittelabschnitt des Magnetpols geneigt ist. Mit dieser Anordnung wird die Änderungsrate der magnetischen Flussdichte während der Verschiebung des Rotors von einem Magnetpol zum benachbarten Magnetpol verringert, wodurch der Wirbelstromverlust und die Wärmeerzeugung verringert werden.

EP 1 411 255 A1 beschreibt Statorkerne für ein homopolares Magnetlager, wobei gezahnte Enden der Statorkerne um einen Rotor herum N-Pole und S-Pole nebeneinander in axialer Richtung bilden. Ferner wird ein Verfahren zur Herstellung beschrieben. Der Statorkern ist mit Vorsprüngen benachbarter N- und S-Pole versehen, die sich um den Umfang erstrecken, so dass sie miteinander in Kontakt oder in unmittelbarer Nähe zueinander stehen, und besteht aus U-förmigen laminierten Stahlblechen, die mit einem Isoliermaterial verschachtelt sind Die Mittelseite ist von der Mittellinienseite aus gesehen offen. Darüber hinaus besteht der Kern aus einem ersten Joch, einem zweiten Joch und einer Schafteinheit, bei der es sich um einen magnetischen Körper handelt, der zwischen den Jochen platziert und befestigt ist, und zumindest die Schafteinheit besteht aus einem magnetischen Materialpulver, das in Harz verfestigt ist.

In der US 2017/0288476 A1 kann ein Aktivteil für eine elektrische Maschine als Stator oder Rotor ausgebildet sein und umfasst mindestens zwei Nuten zur Anordnung einer elektrischen Spulenwicklung einer elektrischen Spule. Zwischen den beiden Schlitzen ist ein Quersteg angeordnet, der aus einem Material besteht, das einen magnetischen Fluss durch die den Quersteg umgebende elektrische Spule leitet. Das Material weist zumindest in einem Bereich eine magnetische Anisotropie mit einer leichten Magnetisierungsachse, die parallel oder zumindest in einem Winkel von weniger als 25° zu einer Spulenachse der Spule ausgerichtet ist, und einer harten Magnetisierungsachse auf. Der Quersteg ist so ausgebildet, dass er für jeden der Schlitze eine Schlitzwand bildet, die das Material enthält. Der Quersteg umfasst einen Kern, der aus einem isotropen weichmagnetischen Material besteht.

DE 198 43 522 A1 beschreibt ein Gerät mit einer gedruckten Schaltungskarte, die sich in den Endwicklungen des Stators befindet. Diese Karte ist mit allen Komponenten ausgestattet, die zur Überwachung des Luftspalts zwischen Stator und Rotor erforderlich sind. Zu den Bauteilen gehören Hall-Sensoren, Wirbelstromsensoren, Temperatursensoren mit allen Zusatzkomponenten zur Verarbeitung der Signale und die Leistungselektronik zur Steuerung der Wicklungen.

In der US 7,579,723 B2 hat ein Leistungsmagnetkern einen Startabschnitt und einen Endabschnitt. Im Pulvermagnetkern bilden sich magnetische Kraftlinien vom Start- bis zum Endabschnitt. Der Pulvermagnetkern umfasst einen ersten Abschnitt, der auf dem kürzesten magnetischen Pfad der magnetischen Kraftlinien angeordnet ist, der den Startabschnitt und den Endabschnitt verbindet, und eine Permeabilität $\mu a$ aufweist, sowie einen zweiten Abschnitt, der abseits des kürzesten magnetischen Pfads der magnetischen Kraftlinien angeordnet ist und eine Permeabilität $\mu b$ aufweist, die größer als $\mu a$ ist. Durch diesen Aufbau werden die gewünschten magnetischen Eigenschaften erreicht und der Eisenverlust ausreichend reduziert.

In der US 2021/0013771 A1umfasst ein Elektromotor einen Rotor, der drehbar um eine in axialer Richtung verlaufende Rotationsachse gelagert ist, und einen Stator, der Statorzähne umfasst, die an der Zahnfußseite T-förmig verbreitert sind, um Polfahnen zu bilden, und sich in Umfangsrichtung erstrecken. Die Pollaschen können eine Anlageschulter bilden. Zwischen benachbarten Statorzähnen ist jeweils eine Statornut zur Aufnahme von Spulen einer Statorwicklung ausgebildet und zwischen einander zugewandten Polfahnen ist eine Nutöffnung ausgebildet. In eine Schlitzöffnung kann ein Verstärkungselement eingesetzt werden. Die Verstärkungselemente werden durch die Anlageschultern an einander zugewandten Polfahnen benachbarter Statorzähne gehalten. Das Verstärkungselement weist eine Kontur auf, die in einen Lagerbereich eingreift, um eine Kontaktfläche mit den Lagerschultern zu verringern.

WO 2014/048 464 A1 beschäftigt sich mit der Erhöhung der magnetischen Flussdichte in einem Aktivteil, welches beispielsweise in einem Magnetlager auftritt, welche kostengünstig erreicht werden kann. Die Druckschrift beschreibt ein Aktivteil einer elektrischen Maschine mit Zähnen, welche jeweils einen Zahnfuß und eine Zahnhöhe aufweisen, zwischen den Zähnen angeordnete, offene oder geschlossene Nuten, und in den Nuten eingebrachten Wicklungen, welche jeweils zumindest einen der Zähne umschließen, wobei das Aktivteil ab der äußeren Oberfläche der jeweiligen Zahnfüße und in Verlängerung der Zähne eine Aktivteildicke aufweist, die größer als die Zahnhöhe ist. Außerdem sind eine derartige elektrische Maschine, ein Radialmagnetlager mit einem derartigen Aktivteil sowie ein Verfahren zur Herstellung eines derartigen Radialmagnetlagers beschrieben. Um ein Aktivteil bereitzustellen, welches vergleichsweise gute magnetische Eigenschaften besitzt und dabei kostengünstig herzustellen ist, wird vorgeschlagen, dass das Aktivteil ausgehend vom jeweiligen Zahnfuß bis zu einer Grenztiefe, welche höchstens gleich der Zahnhöhe ist, ein erstes Material mit einer ersten magnetischen Permeabilität umfasst und ab der Grenztiefe ein zweites Material mit einer zweiten magnetischen Permeabilität umfasst, wobei die erste magnetische Permeabilität größer als die zweite magnetische Permeabilität ist.

Aufgabe der Erfindung ist, die Verlustleistung im Rotorblechpaket oder allgemein im Rotor oder einem Abschnitt des Rotors eines aktiven Magnetlagers zu reduzieren und somit ein verbessertes aktives Magnetlager und einen Stator für ein solches verbessertes aktives Magnetlager als auch ein Verfahren zu dessen Herstellung anzugeben. Damit kann die Erwärmung und somit die notwendige Kühlung reduziert werden, wodurch die Maschine in Design und Betrieb kostengünstiger, weniger energieintensiv und damit umweltfreundlicher werden kann.

Die Erfindung wird durch einen Stator mit den Merkmalen des Anspruchs 1, ein aktives Magnetlager mit den Merkmalen des Anspruchs 7 sowie ein Verfahren mit den Merkmalen des Anspruchs 8 erfindungsgemäß gelöst. Vorteilhafte Ausgestaltungen ergeben sich aus den Unteransprüchen.

Erfindungsgedanke

Eine Reduzierung der Verlustleistung kann erfolgen, in dem die zeitliche Änderung des magnetischen Flusses bzw. der magnetischen Flussdichte, insbesondere der magnetischen Flussdichte in der radialen Richtung, d.h. der Radialkomponente der magnetischen Flussdichte bzw. der radialen Komponente der magnetischen Flussdichte bzw. der radialen magnetischen Flussdichte, die ein Punkt auf dem Rotor (Rotorpunkt) bei der Rotation des Rotors erfährt, verringert wird. Dieses wird erreicht, indem ein Abfall und/oder Anstieg der radialen magnetischen Flussdichte beim Überstreichen des Polzahns und/oder der Pollücke möglichst nicht abrupt erfolgt. Zu dem Rand oder den Rändern des Polzahns in Umfangsrichtung ist somit sanfter Anstieg und/oder Abfall der Radialkomponente der magnetischen Flussdichte wünschenswert.

Die Begriffe magnetischen Flussdichte in der radialen Richtung, Radialkomponente der magnetischen Flussdichte, radiale Komponente der magnetischen Flussdichte und radiale magnetischen Flussdichte werden als Synonyme verwendet.

Dem Fachmann ist bewusst, dass die magnetische Flussdichte von einer magnetischen Leitfähigkeit des Materials an der Position abhängig ist, an der die magnetische Flussdichte betrachtet oder gemessen wird. Da im Folgenden immer ein fester Punkt auf dem Rotor für eine Betrachtung der entstehenden Wirbelströme herangezogen wird, ändert sich die Materialeigenschaft am Betrachtungspunkt nicht. Für die qualitative Beschreibung ist die Materialbeschaffenheit am Rotorpunkt, abgesehen davon, dass eine magnetische Leitfähigkeit vorliegen muss, unerheblich. Im Stator ist die Materialbeschaffenheit hingegen von Belang.

Insbesondere wird ein Stator eines aktiven Magnetlagers

- mit einer axialen Aufnahme für einen durch einen Spalt von dem Stator beabstandeten Rotor, der zum Leiten einer magnetischen Flussdichte und zum Drehen um eine senkrecht zu einer Querschnittsfläche der axialen Aufnahme, in axialer Richtung angeordneten Drehachse ausgebildet ist, und

- mit einem Polzahn geschaffen, der eine Polzahnfläche, die einen Umfangsabschnitt der axialen Aufnahme ausbildet, und zwei Polzahnseitenflächen umfasst, die den Polzahn in einer Umfangsrichtung, welche senkrecht zur axialen Richtung orientiert ist, auf beiden Seiten jeweils gegen eine angrenzende Pollücke abgrenzen, wobei der Polzahn zum Leiten der magnetischen Flussdichte ausgebildet ist, sodass in einem Zentrum der Polzahnfläche die austretende oder eintretende magnetische Flussdichte einen maximalen Betrag in einer radialen Richtung aufweist, die senkrecht zu der axialen Richtung und senkrecht zur Umfangsrichtung orientiert ist, und

- wobei das Material des Polzahns bezogen auf die Umfangsrichtung eine Inhomogenität der Permeabilität, vorzugsweise zumindest an oder benachbart zu der Polzahnfläche, aufweist.

Der Polzahn umfasst ein magnetisch leitfähiges Material. Beispielsweise kann dieses ein magnetisch leitfähiges Blech oder Soft Magnetic Composite (SMC) sein.

Das Material des Polzahns umfasst keinen Permanentmagneten.

Ferner wird ein aktives Magnetlager geschaffen, dass einen wie zuvor beschriebenen Stator und den Rotor umfasst, der in der axialen Aufnahme des Stators beabstandet durch den Spalt angeordnet ist und zum Leiten der magnetischen Flussdichte und zum Drehen um die senkrecht zu der Querschnittsfläche der axialen Aufnahme, in axialer Richtung angeordneten Drehachse ausgebildet ist.

Der Polzahn oder die Polzähne des Stators sind von dem Rotor nur durch den Spalt, in dem ein Vakuum oder ein Fluid, beispielsweise in einem gasförmigen Aggregatszustand, insbesondere Luft, angeordnet ist, voneinander beabstandet.

Es ergibt sich somit ein Stator mit einem Polzahn, der ausgebildet ist, an einer dem Rotor zugewandten Seite, der Polzahnfläche, in Umfangsrichtung zu einer oder zu beiden Polzahnseitenflächen hin jeweils eine bezüglich ihres Betrages abnehmende radiale magnetische Flussdichte gegenüber einer radialen magnetischen Flussdichte in einem Zentrum oder zentralen Bereich der Polzahnfläche bezogen auf deren Ausdehnung in Umfangsrichtung zu leiten. Diese bedeutet, dass der Polzahn so ausgebildet ist, dass die Radialkomponente der magnetischen Flussdichte an der Polzahnfläche abhängig von der Position in Umfangsrichtung variiert, d.h. ihr Betrag zu der einen oder zu beiden Polzahnseitenflächen hin weniger abrupt abnimmt, als bei einem Polzahn nach dem Stand der Technik, bei dem die Polzahnseitenflächen angrenzend an die dem Rotor zugewandte Polzahnfläche im Wesentlichen flach und eben ausgebildet sind. Ein Maximum der radialen Komponente der magnetischen Flussdichte muss nicht in der Mitte des Polzahns, d.h. in einer Mitte der Polzahnfläche liegen. Das Maximum tritt jedoch in einem Zentrum der Polzahnfläche, das heißt nicht an dessen Rand, sondern in einem Bereich auf, der die Mitte umfasst.

Dieses bedeutet ferner, dass nahe der Position der Polzahnseitenfläche in Umfangsrichtung ein Betrag einer Ableitung des stetigen Verlaufs der Radialkomponente der magnetischen Flussdichte an der Oberfläche des Rotors bezüglich einer Wegstrecke in Umfangsrichtung stets kleiner ist als die Ableitung der Radialkomponente der magnetischen Flussdichte an der Oberfläche des Rotors bezüglich einer Wegstrecke in Umfangsrichtung im Fall einer im Wesentlichen ebenen Polzahnseitenfläche kombiniert mit einer homogenen Permeabilität des Materials im Polzahn in der Umfangsrichtung und/oder der radialen Richtung ist.

Ein erfindungsgemäßes Verfahren zum Ausbilden eines Stators eines aktiven Magnetlagers oder eines aktiven Magnetlagers umfasst die Verfahrensschritte:

a) Bereitstellen eines Modells, welches mindestens den Polzahn mit der Polzahnfläche und den Polzahnseitenflächen, zumindest Abschnitte der angrenzenden Pollücken sowie zumindest einen Ausschnitt des durch den Spalt beabstandeten Rotors sowie eine Erzeugung der magnetischen Flussdichte in dem Polzahn modelliert,

b) Berechnen der magnetischen Flussdichte an der Oberfläche des Rotors in der radialen Richtung anhand des Modells als Funktion der Position in der Umfangsrichtung,

c) Berechnen einer Bewertungsfunktion, die ein Maß für in dem Rotor auftretende Verluste abhängig von Änderungen des Betrags der magnetischen Flussdichte in der radialen Richtung an der Oberfläche des Rotors entlang einer Wegstrecke in der Umfangsrichtung bewertet,

d) Variieren einer Permeabilität des Materials des Polzahns in dem Modell,

e) Ausführen der Verfahrensschritte b) bis d) iterativ zum Ermitteln eines Extremwertes der Bewertungsfunktion.

g) Ausgeben von Informationen, die den Polzahn, beispielsweise dessen Gestalt, gemäß dem Modell beschreiben, der mit dem ermittelten Extremwert der Bewertungsfunktion korrespondiert, und

h) Ausbilden eines Stators oder eines aktiven Magnetlagers mit einem Polzahn anhand der ausgegebenen Informationen, der dem Polzahn gemäß dem Modell, beispielsweise bezüglich dessen Gestalt, entspricht.

Um die Permeabilität im Polzahn zu variieren, ist erfindungsgemäß vorgesehen, dass eine Position und/oder eine Form und/oder eine Ausdehnung und/oder das füllende Material der einen oder mehreren Aussparungen in dem Polzahn variiert werden.

Der Extremwert kann beispielsweise ein Minimum sein.

Damit einhergehend kann eine benötige Kühlung verringert oder gänzlich auf eine aktive Kühlung verzichtet werden. Dieses führt zu einer weiteren Vereinfachung des Aufbaus des aktiven Magnetlagers.

Die Verringerung der auftretenden Wirbelströme kann auch genutzt werden, um im Blechpaket des Rotors Bleche mit größeren Materialstärken einzusetzen. Hierdurch kann die mechanische Stabilität des Rotors erhöht werden. Ferner sind Bleche mit größerer Materialstärke leichter herzustellen und einfacher in der Herstellung zu handhaben.

Erfindungsgemäß ist oder wird die Variation der Permeabilität so ausgebildet, dass in dem Polzahn, der ein Material umfasst, beispielsweise Eisen, Elektroblech, SMC und/oder einen Ferrit, eine oder mehrere Aussparungen angeordnet sind, wobei die eine oder mehreren Aussparungen jeweils als von dem Material des Polzahns zumindest jeweils in Ebenen, die senkrecht zur axialen Richtung orientiert sind, umschlossene Hohlräume beabstandet von der Polzahnfläche und optional von der Polzahnseitenfläche ausgebildet sind. In der einen oder den mehreren Aussparungen ist ein anderes Material, beispielsweise Luft oder ein Festkörpermaterial, das sich von dem umgebenden Material des Polzahns zumindest in Bezug auf seine magnetischen Eigenschaften, beispielsweise der Permeabilität, unterscheidet, angeordnet.

Bei einer Ausführungsform weisen zusätzlich zu der Variation der Permeabilität des Materials des Polzahns eine oder beide Polzahnseitenflächen angrenzend an die dem Rotor zugewandte Polzahnfläche einen die Pollücke verjüngenden oder überspannenden Vorsprung auf.

Eine Weiterbildung des Verfahrens sieht daher im Verfahrensschritt d) zusätzlich ein Variieren einer geometrischen Gestalt des Polzahns, insbesondere der Polzahnseitenfläche angrenzend an die Polzahnfläche, vor.

Ein Vorsprung springt gegenüber einer im Wesentlichen radial in den Stator verlaufenden flachen und ebenen Polzahnseitenfläche vor. Durch das Ausbilden des Vorsprungs in der Polzahnseitenfläche angrenzend an die Polzahnfläche wird die Oberfläche dieser Polzahnfläche in der Regel vergrößert. Hiermit einher geht auch eine Änderung der radialen Komponente der magnetischen Flussdichte benachbart zu der Pollücke bzw. über der Pollücke, wenn der Vorsprung die Pollücke überspannt oder teilweise überspannt. Da jedoch die Vergrößerung der Oberfläche über die Ausbildung eines Vorsprungs an einer Polzahnseitenfläche oder die Ausbildung von jeweils einem Vorsprung an beiden Polzahnseitenflächen erfolgt, wird die magnetische Flussdichte nicht über die gesamte Polzahnfläche gleich abgesenkt. Ein Verlauf von magnetischen Feldlinien, insbesondere der Radialkomponente der magnetischen Flussdichte, wird durch das Ausbilden der Vorsprünge an den Polzahnseitenflächen angrenzend an die Pollücke bzw. Pollücken stärker beeinflusst als in einem Zentrum der Polzahnfläche. Dieses führt dazu, dass die Radialkomponente der magnetischen Flussdichte zu dem Rand oder den Rändern der Polzahnfläche in Umfangsrichtung abnimmt. Der gesamte radiale Fluss nimmt jedoch nicht wesentlich ab.

Vorzugsweise wird das Modell als ein Finite-Elemente-Modell bereitgestellt. Mit einem solchen Modell lassen sich gut unterschiedliche geometrische Formen, aber auch lokal unterschiedliche Materialeigenschaften modellieren.

Andere Ausführungsformen können parametrierte Funktionen und Modelle nutzen um den Polzahn und/oder den Stator bzw. die übrigen Elemente des aktiven magnetischen Lagers zu beschreiben und zu modellieren. Eine Form des Polzahns in der Querschnittsebene senkrecht zur Rotationsachse des Rotors kann über parametrierte Funktionen beschrieben sein, so dass die Form über eine Änderung der Parameter angepasst und variiert werden kann.

Der Vorsprung besteht vorzugsweise aus magnetisch gut leitendem Material, wobei ein magnetisch gut leitendes Material eine hohe relative Permeabilität $\mu_r$, vorzugsweise von größer als 500, noch bevorzugter von größer als 1000 aufweist. Die Permeabilität $\mu = \mu_r \cdot \mu_0$ ist gegeben als das Produkt der magnetischen Feldkonstante $\mu_0$ und der relativen Permeabilität $\mu_r$. Die magnetische Feldkonstante $\mu_0$ ist ihrerseits der Kehrwert des Produkts der elektrischen Feldkonstante $\varepsilon_0$ und des Quadrats der Lichtgeschwindigkeit $c^2$. Hierdurch kann erreicht werden, dass der magnetische Fluss in radialer Richtung durch den Vorsprung verläuft. Der Vorsprung kann beispielsweise mittels magnetisch leitfähigen Blechs ausgebildet werden. Alternativ oder zusätzlich können auch weichmagnetische Verbundwerkstoffe, sogenannte soft magnetic composites (SMC), eingesetzt werden. Insbesondere können auch druckbare magnetisch leitfähige Materialien verwendet werden, um den Vorsprung und/oder den Polzahn auch mittels eine 3D-Druckverfahrens herstellen zu können.

Es ist denkbar, dass der Vorsprung einer der Polzahnseitenflächen verschieden zu einem Vorsprung der jeweils anderen Polzahnseitenfläche und/oder einem Vorsprung einer Polzahnseitenfläche eines anderen Polzahns bezüglich einer geometrischen Abmessung und/oder der Inhomogenität der Permeabilität ist. Dies kann vorteilhaft sein, wenn beispielsweise in einem aktiven Magnetlager mehrere Polzähne angeordnet sind und diese eine voneinander abweichende geometrische Abmessung aufweisen und/oder voneinander abweichende magnetische Flussdichten leiten sollen.

Eine Materialstärke des Vorsprungs ist in radialer Richtung jedoch gering im Vergleich zum Rest des Polzahns. Bei einigen Ausführungsformen ist daher vorgesehen, dass am Vorsprung in der Pollücke ein Stützelement zum Aufnehmen von auf den Vorsprung einwirkenden Kräften angeordnet ist.

Besonders bevorzugt ist vorgesehen, dass mindestens das Stützelement ein Material umfasst oder optional aus einem solchen gebildet ist, das eine geringere Permeabilität als das Material des Polzahns im Bereich des Vorsprungs aufweist. Hierdurch wird erreicht, dass ein Verlauf der magnetischen Feldlinien im Polzahn und dessen unmittelbarer Umgebung durch das Stützelement nur gering oder gar nicht beeinflusst wird. Dieses kann deshalb hinsichtlich seiner Form und sonstigen Ausgestaltung frei gewählt werden, um insbesondere die mechanischen Aufgaben der Kraftaufnahme optimal zu gewährleisten.

Bei bevorzugten Ausführungsformen ist vorgesehen, dass das Stützelement formschlüssig an dem Vorsprung anliegt. Hierdurch ist eine besonders gut Krafteinleitung in das mindestens eine Stützelement gewährleistet.

Zusätzlich zu der Form des Polzahns wird somit bei einigen Ausführungsformen des Verfahrens auch ein Stützelement mit in das Modell aufgenommen und über eine Variation angepasst.

Eine optimale Leitung der magnetischen Flussdichte zwischen Polzahn und Vorsprung kann bei Ausführungsformen erreicht werden, bei denen der Vorsprung oder die Vorsprünge einstückig mit dem Rest des Polzahns ausgebildet sind. In diesen Ausführungsformen kann durch den mechanischen Kontakt zwischen Polzahn und Vorsprung eine höhere mechanische Stabilität des Vorsprungs, also ein größerer Widerstand gegen eine mechanische Verformung im Fall einer Krafteinwirkung, als in einer mehrstückigen Ausführungsform erreichbar sein.

Um eine hohe mechanische Stabilität zu erreichen und eine optimale Abnahme der magnetischen Flussdichte zu realisieren ist bei einigen Ausführungsformen vorgesehen, dass der Vorsprung die Pollücke so weit überspannt, dass der Vorsprung einen weiteren Vorsprung einer weiteren Polzahnseitenfläche eines weiteren benachbarten Polzahns berührt oder einstückig mit diesem weiteren Vorsprung ausgebildet ist.

Eine mehrstückige Ausführungsform von Polzahn und Vorsprung kann bei einer Montage des Stators des Magnetlagers vorteilhaft sein. So ist es beispielsweise möglich, dass die Pollücke während eines Fertigungsschrittes zunächst zugänglich sein soll und der Vorsprung eine solche Zugänglichkeit beeinträchtigen kann. In einem solchen Fall wäre eine Montage des Vorsprungs nach dem Fertigungsschritt hilfreich. Es ist auch denkbar, dass der Vorsprung mehrstückig ausgeführt ist.

Das Stützelement kann auch genutzt werden um thermische Lasten aufzunehmen oder abzuleiten. Einige Ausführungsformen sehen vor, dass das Stützelement und der Vorsprung, dessen Kräfte es aufnimmt und/oder das Stützelement und der Polzahn thermisch gekoppelt sind.

Alternativ oder zusätzlich zur Änderung der geometrischen Ausgestaltung des Polzahns an dessen einer Polzahnseitenfläche oder beiden Polzahnseitenflächen gegenüber der aus dem Stand der Technik bekannten, im Wesentlichen trapezförmigen Geometrie des Polzahns, kann auch das Material des Polzahns an der Polzahnfläche eine Variation einer Permeabilität, beispielsweise entlang der Umfangsrichtung, aufweisen. Beispielsweise kann es sein, dass die Permeabilität, ausgehend von einem Abschnitt an der Polzahnfläche, der in einem Zentrum der Polzahnfläche angeordnet ist und mit einer in diesem Abschnitt gegebenen Permeabilität, zu einer Polzahnseitenfläche und/oder zu jeweils beiden Polzahnseitenflächen hin abnimmt. Auch auf diese Weise kann erreicht werden, dass eine Änderung der Radialkomponente der magnetischen Flussdichte an einer Polzahnseitenfläche möglichst nicht abrupt auftritt. Ein Rotorpunkt soll bei der Rotation des Rotors also möglichst weder einen abrupten Anstieg noch einen abrupten Abfall der magnetischen Flussdichte erfahren.

Erfindungsgemäß ist somit vorgesehen, dass die Permeabilität des Materials des Polzahns so entlang der Umfangsrichtung verteilt ist, dass die Permeabilität zumindest benachbart zu der Polzahnfläche in einem Abschnitt des Polzahns nahe der einen Polzahnseitenfläche oder der beiden Polzahnseitenflächen geringer ist als bezogen auf die Umfangsrichtung in einem Zentrum des Polzahns.

Beide erwähnten Maßnahmen, dass Ausbilden eines oder zweier Vorsprünge als auch eine Variation der Permeabilität entlang der Polzahnfläche, die durch den oder die Vorsprünge vergrößert werden kann, können gemeinsam genutzt werden, um diesen Effekt des möglichst sanften Anstiegs und Abfalls der Flussdichte zu Rändern des Polzahns zu bewirken.

Die Permeabilität des Materials kann hierbei vorzugsweise in Umfangsrichtung zu den Rändern, also zu den Polzahnseitenflächen hin abnehmen, also in einer Mitte der Polzahnfläche größer sein als an den Polzahnseitenflächen oder als in dem Vorsprung oder als in den Vorsprüngen.

In einer möglichen Ausführungsform kann die Variation der Permeabilität erreicht werden, indem, beispielsweise in Umfangsrichtung, mindestens zwei Materialien mit jeweils voneinander verschiedenen Werten der Permeabilität angeordnet werden. Beispielsweise können die zwei Materialien SMC und/oder ein Ferrit und/oder Eisen, umfassen. Vorzugsweise weisen die zwei Materialien eine relative Permeabilität $\mu_r$ mit einem Wert größer als 1 auf, beispielsweise $\mu_r$ = 100, $\mu_r$ = 1000 oder auch größer, wobei eines der zwei Materialien eine geringere relative Permeabilität im Vergleich zum anderen der zwei Materialien aufweist. Vorzugsweise ist das Material mit der geringeren relativen Permeabilität in Umfangsrichtung näher zur Polzahnseitenfläche angeordnet als das andere Material.

Im Folgenden wird zur Vereinfachung der Darstellung das Material des Polzahns als erstes Material und das Material in der oder den Aussparungen als zweites Material bezeichnet. Es wird hier ausdrücklich darauf hingewiesen, dass das erste Material hinsichtlich seiner magnetischen Eigenschaften, insbesondere bezogen auf eine Umfangsrichtung des Polzahns, inhomogen sein kein. Das erste und das zweite Material können in einer gemeinsamen bezüglich einer Position der einen oder mehreren Aussparungen im Polzahn lokalen Wirkung zusammen die Leitung des magnetischen Flusses im Polzahn beeinflussen und auf diese Weise eine effektive Wirkung auf die Leitung des magnetischen Flusses im Polzahn, die einer Variation der Permeabilität im Polzahn gleichkommt, erzielen. Es können eine oder mehre Aussparungen ausgebildet werden. Jede der Aussparungen kann bezüglich einer Ausdehnung, Position, Form und einer magnetischen Eigenschaft individuell ausgestaltet sein.

Die Erfindung sieht daher vor, dass der Polzahn eine oder mehrere Aussparungen aufweist, die jeweils mit einem Material gefüllt sind, welches sich von einem umgebenden Material des Polzahns zumindest hinsichtlich der Permeabilität unterscheidet.

Die Aussparung im Polzahn kann beispielsweise über ein 3D-Druckverfahren oder auch eine Bearbeitung wie beispielsweise Bohren, Schleifen, Fräsen, Lasern, Stanzen, Ätzen erzeugt werden.

Es ist hierbei möglich, dass eine Ausdehnung der Aussparung bei einer Ausführungsform einen maximalen Durchmesser von kleiner als 0,5 mm, bevorzugt kleiner als 1 mm, mehr bevorzugt kleiner als 5 mm, besonders bevorzugt kleiner als 10 mm aufweist. Der Vorteil bei der Verwendung einer oder mehrerer solch kleiner Aussparungen besteht darin, dass die Wirkung zur Einstellung einer effektiv wirkenden Permeabilität besonders fein justiert werden kann, insbesondere wenn eine Mehrzahl von Aussparungen ausgebildet ist. Dabei besteht ein weiterer Vorteil darin, dass die mechanische Stabilität des Polzahns mit der Aussparung oder den Aussparungen nur geringfügig schwächer ist als ohne die Aussparung oder Aussparungen. Dieser Vorteil ist insbesondere wirksam, wenn es sich bei der Aussparung oder den Aussparungen um Fremdmaterialeinschlüsse oder gefüllte Hohlvolumina handelt. Es ist denkbar, dass ein Polzahn einen oder mehrere Bereiche mit jeweils mindestens 20 Aussparungen, bevorzugt mindestens 10 Aussparungen, besonders bevorzugt mindestens 2 Aussparungen umfasst.

Verschiedene Polzähne in einem Stator eines aktiven Magnetlagers können verschieden ausgebildet sein, um beispielsweise nicht radialsymmetrische auf das Lager oder dessen Komponenten wie den Rotor einwirkende Kräfte kompensieren zu können. Die Gravitationskraft stellt beispielsweise eine solche nicht radialsymmetrisch wirkende Kraft dar.

In einer anderen Ausführungsform, beispielsweise bei einem geblechten Aufbau des Stators, kann die Variation der Permeabilität auch als eine oder mehrere Aussparungen ausgebildet sein, wobei die eine oder mehreren Aussparungen als eine oder mehrere Aussparungen eines Bleches ausgebildet sind. Der Stator kann mehrere Bleche umfassen. Ein Blech kann beispielsweise Eisen, Elektroblech, SMC und/oder einen Ferrit umfassen. Jede der einen oder mehreren Aussparungen kann bezüglich einer Ausdehnung und einer magnetischen Eigenschaft individuell ausgestaltet sein. In der einen oder den mehreren Aussparungen des Bleches kann ein zweites Material, beispielsweise Luft oder ein Material, das sich vom Material des Bleches zumindest in Bezug auf seine magnetischen Eigenschaften, beispielsweise der Permeabilität, unterscheidet, angeordnet sein.

Die eine oder mehreren Aussparungen des Bleches können beispielsweise eine durch das Blech vollständig hindurchgehende oder auch nicht vollständig hindurchgehende Aussparung umfassen, wobei die eine oder mehreren Aussparungen jeweils eine Öffnung mit einem Flächeninhalt in der Oberfläche des Bleches aufweisen. Es ist hierbei möglich, dass der Flächeninhalt der Öffnung in der Oberfläche des Bleches einen Wert kleiner als 0,05 mm$^2$, bevorzugt kleiner als 1 mm$^2$, besonders bevorzugt kleiner als 10 mm$^2$ aufweist. Der Vorteil bei der Verwendung einer solch kleinen Öffnung und einer dementsprechend kleinen Aussparung besteht darin, dass die Wirkung zur Einstellung einer effektiv wirkenden Permeabilität besonders fein justiert werden kann, insbesondere, aber nicht ausschließlich, wenn eine Mehrzahl solcher Aussparungen jeweils in einem Bereich oder jeweils in mehreren Bereichen des Polzahns ausgebildet ist. Dabei besteht ein weiterer Vorteil darin, dass die mechanische Stabilität des Polzahns durch eine derart kleine Öffnung und eine dementsprechend kleine Aussparung nur geringfügig schwächer ist als ohne Aussparung. Es ist denkbar, dass der eine oder die mehreren Bereiche des Polzahns mit Aussparungen mindestens 20 Aussparungen, bevorzugt mindestens 10 Aussparungen, besonders bevorzugt mindestens 2 Aussparungen umfassen. In einer anderen Ausführungsform ist es denkbar, dass die Mehrzahl solcher Aussparungen mindestens 20 Aussparungen, bevorzugt mindestens 10 Aussparungen, besonders bevorzugt mindestens 2 Aussparungen eines Bleches eines Polzahns umfasst. Es besteht die Möglichkeit, die eine oder mehrere Aussparungen mit Hilfe eines Lasers, 3D-Druck oder auch über eine Bearbeitung wie beispielsweise Bohren, Schleifen, Fräsen, Stanzen, Ätzen zu erzeugen.

Insbesondere bei einem aus mehreren Blechen, die in axialer Richtung geschichtet sind, aufgebauten Stator oder Polzahn, kann jedes der Bleche für jeden Polzahn eine oder mehrere Aussparungen aufweisen. Die Aussparungen der Mehrzahl von Blechen können in axialer Richtung aneinander anschließen, so dass sich in einem Polzahn Aussparungen ausbilden, die mehrere Bleche ganz oder teilweise durchdringen. Die Aussparungen können in der Mehrzahl der Bleche jedoch auch von Blech zu Blech unterschiedlich oder gleich positioniert und auch unterschiedlich oder gleich hinsichtlich der Form und Eindringung und/oder Durchdringungstiefe ausgebildet sein.

Vorzugsweise sind die Aussparungen bezogen auf eine Ebene, welche einen Polzahn in axialer Richtung halbiert in dem Polzahn symmetrisch ausgebildet oder verteilt. Auf dieses Weise werden im Polzahn wirkende axiale Kräfte vermieden oder zumindest reduziert.

Ferner können die Aussparungen in einem Polzahn bezogen auf eine radiale Mittelebene, die einen Polzahn in radialer Richtung mittig durchläuft, symmetrisch ausgebildet sein. Hieraus können sich fertigungstechnische Vorteile ergeben. Andererseits können die Aussparungen in einem Polzahn bezogen auf eine radiale Mittelebene, die einen Polzahn in radialer Richtung mittig durchläuft, auch asymmetrisch ausgebildet sein. Hieraus ergibt sich vorteilhafterweise ein weiterer Freiheitsgrad in der Optimierung des Gradienten der magnetischen Flussdichte an den Polzahnseitenflächen.

Das Verfahren sieht entsprechend vor, dass beim Variieren eine lokale Permeabilität des Materials des Polzahns positionsabhängig, beispielsweise abhängig von einer Position entlang der Umfangsrichtung, unterschiedlich verändert wird. Es bilden sich ein oder mehr Gradienten der Werte der Radialkomponente der magnetischen Flussdichte aus.

Eine Ausführungsform sieht vor, dass die eine oder die mehreren Aussparungen benachbart zu der oder den Polzahnseitenflächen ausgebildet sind.

Vorzugsweise sind die eine oder die mehreren Aussparungen dann mit einem oder verschiedenen Material gefüllt, welches oder welche eine geringere Permeabilität als das umgebende Material des Polzahns aufweist oder aufweisen. Verschiedene Aussparungen können verschieden ausgestaltet und unterschiedlich gefüllt sein.

Andere Ausführungsformen können Aussparungen nur in einem zentralen Bereich bezogen auf die Umfangsrichtung des Polzahns aufweisen. Diese sind dann vorzugsweise mit einem Festkörpermaterial gefüllt, das eine höhere Permeabilität als das umgebende Material aufweist, aus dem der Polzahn gebildet ist. Auch hier können die Aussparungen verschieden ausgestaltet sein und unterschiedliche gefüllt sein. Auch auf diese Weise lässt sich ein Gradient der Radialkomponente eines magnetischen Flusses im Betrieb des aktiven Magnetlagers bezüglich der Umfangsrichtung zu erzeugen. Die Radialkomponente nimmt zu den Rändern bzw. Polzahnseitenflächen des Polzahns ab.

Der Stator ist beispielsweise so ausgebildet, dass in der Pollücke ein Abschnitt mindestens einer Wicklung zum Ausbilden der magnetischen Flussdichte in dem Polzahn bei einer Bestromung der mindestens einen Wicklung angeordnet ist. Die Wicklung kann genutzt werden, die magnetische Flussdichte in dem Polzahn zu erzeugen. Die Wicklung kann klassisch aus einem Draht gewickelt sein. Andere Ausführungsformen sehen vor, dass die Wicklung und deren Bestandteile mittels 3D-Drucks erzeugt oder gegossen sind.

Bevorzugt wird das Modell als Finite-Elemente-Modell bereitgestellt. Es ermöglicht eine sehr gute und flexible Modellierung sowohl der Geometrie des Polzahns sowie der übrigen Komponenten des Stators bzw. des aktiven Magnetlagers als auch der verwendeten Materialien oder Materialeigenschaften. Beispielsweise kann die Permeabilität der einzelnen Komponenten, insbesondere die in radialer Richtung wirkende Permeabilität, modelliert werden. Sowohl der Polzahn, als auch beispielsweise ein Stützelement können hierdurch sehr gut und präzise modelliert werden. Außerdem kann eine Granulation auf einfache Weise angepasst werden.

Eine Ausführungsform des Verfahrens sieht vor, dass der Verfahrensschritt Berechnen einer Bewertungsfunktion die Schritte umfasst:

i) Berechnen eines Fourierkoeffizienten für eine hohe Ortsfrequenz und eines Fourierkoeffizienten für eine tiefe Ortsfrequenz aus dem Verlauf der magnetischen Flussdichte in der radialen Richtung an der Oberfläche des Rotors in der Umfangsrichtung,

ii) Berechnen eines Kennwertes, der ein Verhältnis zwischen dem Fourierkoeffizienten für die hohe Ortsfrequenz und dem Fourierkoeffizienten für die tiefe Ortsfrequenz und/oder eine gewichtete Summe einer Potenz des Fourierkoeffizienten für die tiefe Ortsfrequenz und/oder einer Potenz des Fourierkoeffizienten für die hohe Ortsfrequenz enthält,

umfasst.

Man kann beispielsweise mit Hilfe der Modellierung eine Radialflussdichtefunktion $B_R(x)$ ermitteln, welche eine radiale Komponente der magnetischen Flussdichte an einer dem Polzahn zugewandten Seite des Rotors als Funktion der Umfangsposition x in der Aufnahme angibt. Mittels einer räumlichen Fourier-Transformation der Radialflussdichtefunktion können Fourierkoeffizienten bestimmt werden. Die auftretenden Fourierkoeffizienten können in hochfrequente HF-Fourierkoeffizienten und in niederfrequente NF-Fourierkoeffizienten abhängig von den zugehörigen Frequenzen unterteilt werden. Sowohl die tiefe Frequenz als auch die hohe Frequenz können jeweils als eine Ortsfrequenz interpretiert werden, da die Radialflussdichtefunktion einen ortsabhängigen Verlauf aufweist. Beim Berechnen der Bewertungsfunktion kann ein Fourierkoeffizienten-Verhältnis FV durch bilden eines Verhältnisses einer Summe der Absolutbeträge der HF-Fourierkoeffizienten zu einer Summe der Absolutbeträge der NF-Fourierkoeffizienten ermittelt werden. Eine Minimierung des Fourierkoeffizienten-Verhältnisses FV sorgt für eine Optimierung des Stators oder des aktiven Magnetlagers.

Die Fourierkoeffizienten, die den hohen Ortsfrequenzen zugeordnet sind, d.h. die HF-Fourierkoeffizienten sind mit einer abrupten Änderung der Radialkomponente der magnetischen Flussdichte zu assoziieren. Deshalb ist eine Verringerung des Verhältnisses der Summe der Absolutwerte der HF-Fourierkoeffizienten zur Summe der Absolutwerte der NF-Fourierkoeffizienten mit einer Verringerung der Wirbelströme korreliert, die in dem Rotor, insbesondere in dessen Rotorblechpaket, entstehen. Das Verfahren führt somit zur Optimierung des aktiven Magnetlagers in Bezug auf die Verlustleistung, die bei dessen Betrieb entsteht. Durch das Verfahren wird somit die Ausbildung des Polzahns bzw. der Polzähne des Stators verbessert, um eine Reduzierung der Wirbelstromverluste zu erreichen.

Ein Kennwert, der eine gewichtete Summe einer Potenz des Fourierkoeffizienten für die tiefe Ortsfrequenz und/oder einer Potenz des Fourierkoeffizienten für die hohe Ortsfrequenz enthält, kann beispielsweise gebildet werden mit:

$$Loss = \sum_{k=1}^{K} m_a \left| \frac{F(jk)}{1.5T} \right|^2 \cdot \left[ \left( \frac{f_k}{50\,Hz} \right)^2 \cdot \sigma_{w,50} + \left( \frac{f_k}{50\,Hz} \right) \cdot \sigma_{h,50} \right], \qquad (1)$$

wobei Loss als Kenngröße mit dem Verlust assoziiert werden kann und wobei $m_a$ eine Masse eines berücksichtigten Rotorabschnitts bezeichnet, $f_k = k \cdot N/60$ mit N als Drehzahl in Rotationen pro Minute eine Frequenz angibt, F(jk) den jeweiligen $f_k$ zugeordneten Fourierkoeffizienten angibt, der aus der räumlichen Fourier-Transformation der Radialflussdichtefunktion genau eines kompletten Umlaufs um den Rotor bestimmt wird. j ist die imaginäre Zahl. Die Materialkonstante $\sigma_w$ ist ein Wirbelstromverlustkoeffizient und die Materialkonstante $\sigma_h$ ist ein Hysteresekoeffizient. Beide Materialkonstanten sind entsprechend des für die Herstellung verwendeten oder zu verwendenden Materials zu wählen. Über die Indexgrenze K kann ausgewählt werden, welche Frequenzkomponenten berücksichtigt werden. Diese Berechnungsformel stellt lediglich ein Beispiel dar. Es können beispielsweise auch andere Potenzen als 2 gewählt werden, einzelne Frequenzen können aus der Summe entfallen und es sind auch weitere oder andere zu berücksichtigende Materialeigenschaften denkbar.

Der Verfahrensschritt Berechnen der Bewertungsfunktion kann auch den Schritt Berechnen der örtlichen Ableitung des Betrags der magnetischen Flussdichte in radialer Richtung an der Oberfläche des Rotors umfassen.

Alternativ oder zusätzlich kann das Berechnen der Bewertungsfunktion den Schritt Berechnen eines Mittelwertes einer Funktion der örtlichen Ableitung der magnetischen Flussdichte in der radialen Richtung an der Oberfläche des Rotors entlang einer Wegstrecke in der Umfangsrichtung, also der Radialflussdichtefunktion, umfassen. Eine Minimierung dieses Mittelwerts führt ebenso zu einer Verringerung der Wirbelstromverluste in dem Rotor aufgrund abrupter magnetischer Flussdichteänderungen.

Bei einer Weiterbildung ist vorgesehen, dass das Berechnen der Bewertungsfunktion unter zusätzlicher Berücksichtigung mindestens einer weiteren, insbesondere im Betreib auftretenden, Größe des aktiven Magnetlagers ermittelt wird, und ein Ermitteln eines Extremwertes der Bewertungsfunktion und unter Berücksichtigung eines Vorgabewertes der mindestens einen Größe erfolgt.

Zum einen kann es sich bei der Größe beispielsweise um mechanische Vorgaben handeln, wie beispielsweise einen Mindestabstand zwischen benachbarten Polzähnen oder ähnliche Vorgaben.

Zum anderen kann es sich bei der Größe aber auch beispielsweise um die Kraft handeln, die auf den Rotor wirkt. Hierfür kann beispielsweise ein Minimalwert vorgegeben sein, damit das aktive Magnetlager einwandfrei betrieben werden kann.

Eine Ausführungsform sieht daher vor, dass die mindestens eine Größe eine wirkende Kraft ist. Beispielsweise kann dies die Kraft sein, die vom Magnetlager erzeugt wird und die dazu dient, den Rotor zu tragen. Die Kraft würde in diesem Fall der Gewichtskraft des Rotors entsprechen.

Um die Permeabilität im Polzahn zu variieren, ist erfindungsgemäß vorgesehen, beim Variieren der Permeabilität des Materials des Polzahns in dem Modell, dass eine oder mehrere Aussparungen in dem Polzahn angeordnet werden, die mit einem Material gefüllt sind, welches sich von einem umgebenden Material des Polzahns zumindest hinsichtlich der Permeabilität unterscheidet.

Die Erfindung wird nachfolgend unter Bezugnahme auf eine Zeichnung näher erläutert. Hierbei zeigen:

Fig. 1 einen Ausschnitt einer schematischen Zeichnung eines aktiven Magnetlagers nach dem Stand der Technik;

Fig. 2 ein schematisches Diagramm der magnetischen Flussdichte in einer radialen Richtung entlang einer Umfangsrichtung eines Stators mit Polzähnen nach dem Stand der Technik;

Fig. 3 einen Ausschnitt einer schematischen Zeichnung eines aktiven Magnetlagers mit einem Polzahn mit Vorsprüngen an den Polzahnseitenflächen;

Fig. 4 ein schematisches Diagramm der magnetischen Flussdichte in der radialen Richtung entlang einer Umfangsrichtung eines Stators mit Polzähnen, die an deren Polzahnseitenflächen Vorsprünge aufweisen;

Fig. 5 einen Ausschnitt einer schematischen Zeichnung eines aktiven Magnetlagers mit einem Polzahn mit Vorsprüngen an den Polzahnseitenflächen und Stützelementen;

Fig. 6 einen Ausschnitt einer schematischen Zeichnung eines aktiven Magnetlagers mit einem Polzahn und einem weiteren benachbarten Polzahn, deren Vorsprünge miteinander in Kontakt sind;

Fig. 6a einen Ausschnitt einer schematischen Zeichnung eines aktiven Magnetlagers mit einem Polzahn mit Aussparungen zum Variieren einer Permeabilität in Umfangsrichtung; und

Fig. 7 ein schematisches Flussdiagramm eines Verfahrens zum Erzeugen eines Stators eines aktiven Magnetlagers oder des aktiven Magnetlagers selbst.

Gleiche technische Merkmale sind in allen Figuren mit denselben Bezugszeichen gekennzeichnet.

In Fig. 1 ist ein Ausschnitt einer schematischen Darstellung eines aktiven Magnetlagers 100 nach dem Stand der Technik gezeigt, das bereits oben in der Beschreibungseinleitung erläutert ist.

Gezeigt ist ein Ausschnitt eines aktiven Magnetlagers 100. In einem Stator 2 ist eine axiale Aufnahme 8 ausgebildet, in der ein Rotor 1 angeordnet ist. Der Stator 2 weist mehrere Polzähne 4 auf. Die Polzähne 4 weisen jeweils eine die axiale Aufnahme abschnittsweise begrenzende Polzahnfläche 17 auf. Der Rotor 1 ist von diesen Polzahnflächen 17 und somit den Polzähnen 4 über einen Spalt 3 beabstandet. Zwischen je zwei benachbarten Polzähnen 4 ist jeweils eine Pollücke 5 ausgebildet. Die den Pollücken 5 zugewandten Flächen der Polzähne 4 werden hier als Polzahnseitenflächen 18a, 18b bezeichnet. Bei den Ausführungen gemäß dem Stand der Technik, wie in Fig 1 dargestellt, sind die Polzahnseitenflächen 18a, 18b angrenzend an die Polzahnflächen 17 eben und flach, beispielsweise parallel zu einer radialen Richtung 11 ausgebildet.

In den Pollücken 5 befinden sich vorzugsweise ein oder mehrere elektrische Leiter (nicht dargestellt), die jeweils eine Wicklung um den Polzahn 4 ausbilden. Die Wicklung ist somit durch mindestens einen elektrischen Leiter ausgebildet, der durch die angrenzenden Pollücken 5 verläuft und den Polzahn 4 oberhalb und unterhalb der Zeichnungsebene umschließt.

Fließt durch die Wicklung ein Strom, so wird in dem Polzahn, der in der Regel ein weichmagnetisches Material mit sehr guter magnetischer Leitfähigkeit umfasst und beispielsweise als Blechstapel ausgeführt sein kann, ein magnetisches Feld erzeugt. Eine Radialkomponente einer magnetischen Flussdichte des magnetischen Felds ist bei der Ausführungsform im Stand der Technik entlang einer dem Rotor 1 zugewandten Polzahnfläche 17 entlang einer Umfangsrichtung 12 nahezu konstant. In der Pollücke 5 fällt der Betrag der radialen Komponente der magnetischen Flussdichte abrupt, in der Regel auf null oder nahezu null, ab und steigt dann wieder abrupt im Bereich des benachbarten Polzahns 4 an.

In Fig. 2 ist schematisch ein Graph 30 einer radialen Komponente der magnetischen Flussdichte 31 in Abhängigkeit einer Position 32 entlang der Umfangsrichtung 12 in der axialen Aufnahme 8 des Stator 2 (vergleiche Fig. 1) gemäß dem Stand der Technik dargestellt. Der Graph 30 gibt somit die radiale Komponente der magnetischen Flussdichte 31 an, die ein Rotorpunkt 21 an den verschiedenen Positionen während der Rotation des Rotors 1 erfährt. Die Position des Rotorpunkts 21 kann als Winkelposition angegeben sein oder als Länge, wobei diese entlang der Bahnkurve gemessen ist, die der Rotorpunkt bei der Rotation des Rotors 1 durchläuft. Gezeigt ist die radiale magnetische Flussdichte 31, die in einem Abstand, der dem Spalt 3 zwischen der dem Rotor 1 zugewandten Polzahnfläche 17 eines der Polzähne 4 und dem Rotor 1 entspricht, beabstandet von dem Stator 2 auftritt. Hierbei wird angenommen, dass die Statoroberfläche der axialen Aufnahme 8 einer Zylinderinnenfläche entspricht, von der Abschnitte durch mittlere Abschnitte 24 der Polzahnflächen 17 gebildet sind.

Während einer vollständigen Rotation des Rotors 1 überstreicht der Rotorpunkt 21 bei der Ausführungsform nach Fig. 2 insgesamt acht Polzähne 4-1 bis 4-8 (nicht alle dargestellt). Deren Mittenpositionen (kurz auch als Positionen bezeichnet) mit 14-1 bis 14-8 in Fig. 2 angedeutet sind. Nachgestellte natürliche Zahlen "-x" deuten eine Indexierung der Polzähne in einem Stator an. Die die entsprechenden Polzähne 4-1 bis 4-8 umschließenden Wicklungen sind im Betrieb so bestromt, dass über dem ersten Polzahn 4-1 und dem vierten Polzahn 4-4, d. h. an den Positionen 14-1 und 14-4, eine negative magnetische Flussdichte erfasst wird, die über eine gesamte Polzahnausdehnung konstant ist. Die Polzähne 4-2 und 4-3 an den Positionen 14-2, 14-3 erzeugen eine positive magnetische Flussdichte. Die Wicklungen der übrigen Polzähne 4-5 bis 4-8 an den Positionen 14-5 bis 14-8 sind nur minimal oder gar nicht bestromt.

Wenn der Rotorpunkt 21 an einer der Polzahnseitenflächen 18a-n, 18b-n an den Positionen 28a-n, 28b-n (n= 1, 2, ..., 4) vorüberstreicht, steigt oder fällt die magnetische Flussdichte abrupt, in der dargestellten Ausführungsform nach dem Stand der Technik um mehr als 90% des Betrags der maximalen magnetischen Flussdichte 33 oder minimalen magnetischen Flussdichte 34. Diese abrupte Änderung der magnetischen Flussdichte verursacht im Rotorblechpaket 1a des Rotors 1 Wirbelströme, die zu einer Erwärmung des Blechpakets 1a führen. Diese Wirbelströme stellen somit wesentliche Verluste dar, die beim Betrieb des aktiven magnetischen Lagers 100 auftreten. Diese sind proportional zu der Ableitung der radialen Komponente der magnetischen Flussdichte.

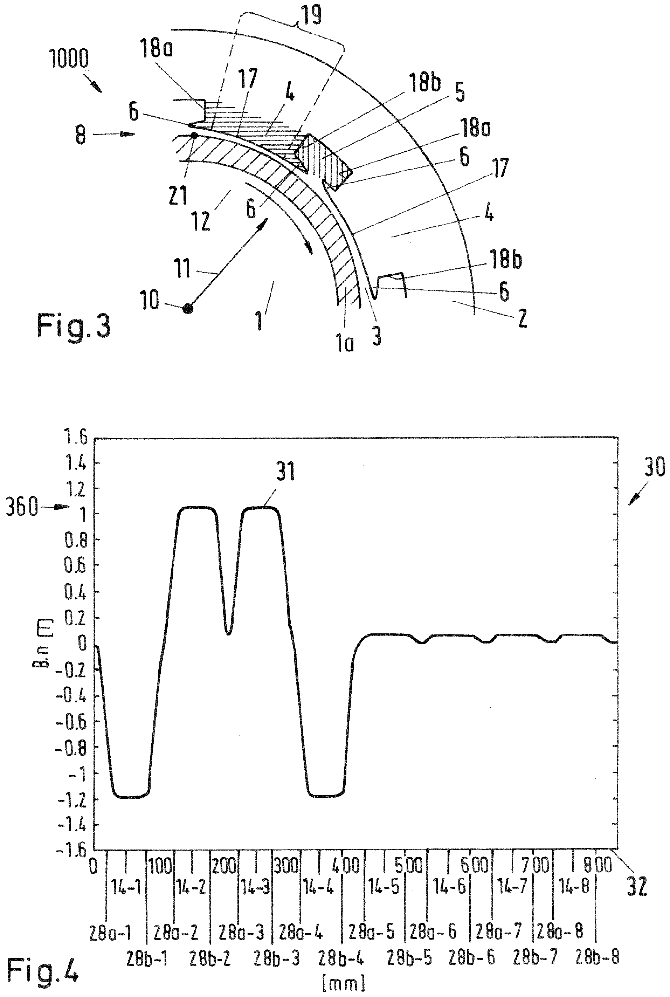

In Fig. 3 ist schematisch ein Ausschnitt eines aktiven Magnetlagers 1000 gezeigt, bei dem die Polzahnseitenflächen 18a, 18b der Polzähne 4 jeweils angrenzend an die Polzahnflächen 17 mit Vorsprüngen 6 ausgebildet sind. Diese ragen in die Pollücke 5 zwischen benachbarten Polzähnen 4 hinein. Die Vorsprünge 6 ragen jeweils gegenüber den sich radial nach innen in den Stator 2 erstreckenden Polzahnseitenflächen 18a, 18b hinaus, die den jeweiligen Polzahn 4 zur angrenzenden Pollücke 5 verbreitern und die Pollücke zum Rotor 1 hin eingrenzen und verjüngen bzw. die Pollücke teilweise überspannen. Die Vorsprünge 6 sind jeweils aus magnetisch leitfähigem Material ausgebildet. Die Vorsprünge 6 können, wie in Fig. 3 gezeigt, einstückig mit dem Rest des Polzahns 4 ausgebildet sein.

In Fig. 4 ist analog zur Fig. 2 ein Graph 30 der magnetischen Flussdichte 31 in Abhängigkeit der Position 32 entlang der Umfangsrichtung 12 in der axialen Aufnahme 8 des Stators 2 (vergleiche Fig. 3) dargestellt.

Bis auf die Vorsprünge 6 gleicht die Ausführungsform der Fig. 3 der Ausführungsform nach Fig. 1 nach dem Stand der Technik und die in Fig. 4 dargestellte Situation des aktiven Magnetlagers 1000 der in Fig. 2 dargestellten Betriebssituation des aktiven Magnetlagers 100 nach dem Stand der Technik.

Ein Betrag 360 der radialen Komponente der magnetischen Flussdichte an den Mittenpositionen 14-1 bis 14-4 ist leicht gegenüber dem Betrag 36 der radialen Komponente der magnetischen Feldflussdichte an den entsprechenden Positionen 14-1 bis 14-4 in dem Graph 30 der Ausführungsform nach dem Stand der Technik in Fig. 2 geringer. Deutlich auffallend ist jedoch, dass die radiale Komponente der magnetischen Flussdichte 31 beim Überstreichen einer der Positionen 28a-n, 28b-n (n= 1, 2, ..., 4) der Polzahnseitenflächen 18a-n, 18b-n der Abfall bzw. Anstieg der magnetischen Flussdichte 31 nicht so abrupt wie bei der Ausführungsform nach dem Stand der Technik gemäß Fig. 1 und 2 stattfindet. Die Positionen 28a-n, 28b-n sind anhand einer Extrapolation der ebenen flachen Abschnitte ohne die Vorsprünge 6 der Polzahnseitenflächen 18a-n, 18b-n auf die Oberfläche des Rotors 1 ermittelt. Sie entsprechen somit den Positionen 28a-n, 28b-n der Ausführungsform nach Fig. 1 und 2.

Dementsprechend ist die Ableitung $dB_R(x)/dt$ der Flussdichtekurve $B_R(x)$ an den Rändern der überstrichenen Polzähne 4, also an den Polzahnseitenflächen, betragsmäßig kleiner, sodass auch die erzeugten Wirbelströme und somit die Verluste geringer sind.

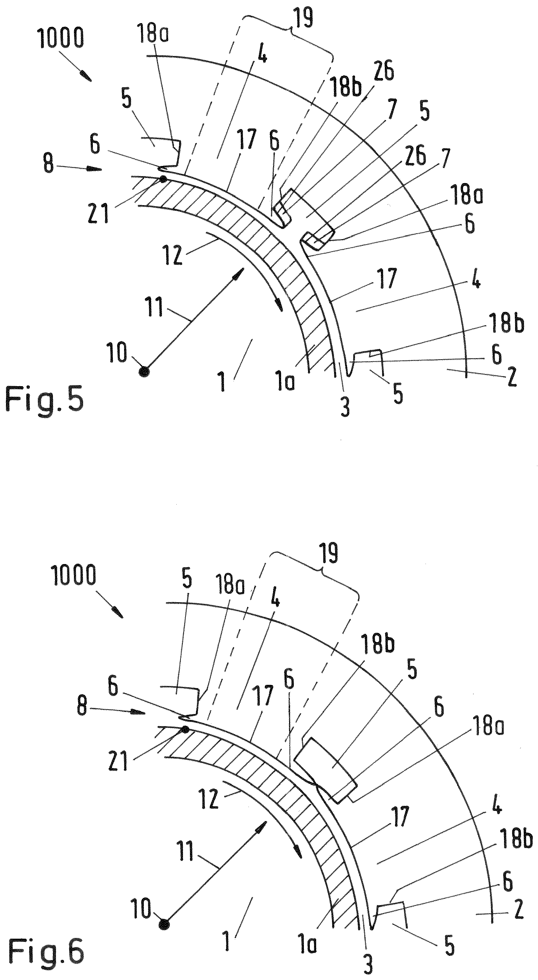

In Fig. 5 ist eine Weiterbildung der Ausführungsform nach Fig. 3 dargestellt. Bei dieser Ausführungsform sind Stützelemente 7 ausgebildet, die auf die Vorsprünge 6 wirkende Kräfte aufnehmen. Wie dargestellt, liegen die Stützelemente 7 vorzugsweise formschlüssig an den Vorsprüngen 6 an einer von dem Rotor 1 abgewandten Seite 26 des entsprechenden Vorsprungs 6 an. Die Stützelemente 7 ragen somit in die Pollücken 5 hinein.

Die Stützelemente 7 sind vorzugsweise aus einem magnetisch schlecht leitenden oder magnetisch nicht leitenden Material ausgebildet. Insbesondere weist das Material, aus dem die Stützelemente 7 ausgebildet sind, eine geringere magnetische Leitfähigkeit als das Material auf, aus dem die Vorsprünge 6 gebildet sind. Das Zufügen der Stützelemente 7 hat somit auf die Ausbildung der radialen Komponente der magnetischen Flussdichte keinen oder nahezu keinen Einfluss.

Neben der mechanischen Stabilisierung der Vorsprünge 6 können die Stützelemente 7 auch thermische Lasten aufnehmen und so vorzugsweise mit dem entsprechenden Vorsprung 6 und/oder dem angrenzenden Rest des Polzahns 4 in thermischem Kontakt stehen.

Es besteht darüber hinaus die Möglichkeit, dass das Stützelement 7 und der Vorsprung 6 einstückig ausgeführt sind, beispielsweise herstellbar durch ein 3D-Druckverfahren. Darüber hinaus besteht hierbei die Möglichkeit, einen Übergang der Permeabilität innerhalb des Vorsprungs zu der Permeabilität des Stützelements 7 in kleinen Abstufungen auszuführen. Kleine Abstufungen können im Extremfall auch zu einem in seiner Wirkung kontinuierlichen Übergang der Permeabilität führen.

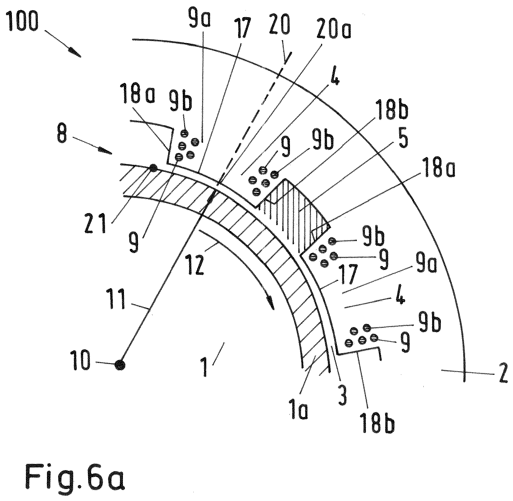

In Fig. 6 ist eine weitere Ausgestaltung der Polzähne 4 gezeigt. Bei dieser Ausführungsform überspannen die Vorsprünge 6 benachbarter Polzähne 4 die gesamte zwischen diesen Polzähnen 4 bestehende Pollücke 5. Hierbei ist die Form der Vorsprünge 6 so gestaltet, dass sich kein magnetischer Kurzschluss ergibt. Bei einigen Ausführungsformen (nicht dargestellt) wird der mechanische Kontakt zwischen den benachbarten Vorsprüngen 6 über das Stützelement oder ein anderes Verbindungselement ausgebildet, welches aus einem magnetisch schlecht leitenden Material gefertigt ist.

Bei anderen Ausführungsformen kann alternativ oder kumulativ zu dem Ausbilden von Vorsprüngen oder allgemein der geometrischen Modifikation auch die magnetische Permeabilität des Materials des Polzahns variiert werden. So können die Polzähne ausgebildet sein, dass eine magnetische Permeabilität im Polzahn zu den Pollücken oder den Polzahnseitenflächen hin abnimmt. Der Polzahn ist vorzugsweise so ausgebildet, dass die magnetische Permeabilität vorzugsweise zumindest angrenzend an die Polzahnfläche 17 variiert. Hierbei nimmt die Permeabilität zu den Pollücken ab.

Die Permeabilität des Materials kann jedoch auch im Innern, d.h. beabstandet von der Polzahnfläche eine Variation der magnetischen Permeabilität, insbesondere der radialen Komponente der magnetischen Permeabilität aufweisen. Auch hier ist die Permeabilität angrenzend an die Polzahnseitenflächen vorzugweise geringer als in einer Mitte zwischen den Polzahnseitenflächen.

Figur 6a zeigt schematisch eine Ausgestaltung eines Polzahns 4 mit mehreren Aussparungen 9. Die Anzahl und/oder Größe und/oder Form und/oder Anordnung der Aussparungen 9 kann variieren. Wie in Figur 6a gezeigt, sind jeweils mehrere Aussparungen 9 benachbart zu den Polzahnseitenflächen 18a, 18b ausgebildet. Diese durchdringen den Polzahn 4 in der axialen Richtung beispielsweise vollständig. Bei anderen Ausführungsformen, bei denen der Stator 2 aus in axialer Richtung geschichteten Blechen ausgebildet ist, können die Aussparungen nur in einzelnen Blechen ausgebildet sein. Die Aussparungen können insbesondere in den Blechen verschieden ausgebildet sein. Die Größen und die Anordnung der Aussparungen 9 sind nur exemplarisch dargestellt.

Die Aussparungen sind in Umfangsrichtung 12 nicht gleichmäßig im Polzahn 4 verteilt. Vorzugseise sind diese benachbart zu den Polzahnseitenflächen und, in dieser Darstellung beispielhaft, symmetrisch zu einer Mittelebene 20 des Polzahns 4 ausgebildet. Andere Ausführungsformen können nur Aussparungen in, bezogen auf die Umfangsrichtung 12, einer Mitte 20a des Polzahns 4 vorsehen. Ziel ist es, jeweils einen, vorzugsweise niedrigen, Gradienten der Radialkomponente eines magnetischen Flusses im Betreib des aktiven Magnetlagers 1000 bezüglich der Umfangsrichtung zu erzeugen.

Der Polzahn kann ein erstes Material 9a umfassen. Jede der Aussparungen ist mit einem Material 9b gefüllt, das hier ohne Beschränkung der Allgemeinheit als zweites Material bezeichnet ist, welches sich von dem umgebenden Material 9a des Polzahns, hier als erstes Material bezeichnet, unterscheidet. Das erste Material 9a und das zweite Material 9b unterscheiden sich bezüglich ihrer magnetischen Eigenschaften, insbesondere der Permeabilität. Beispielsweise kann das erste Material 9a aus Eisen oder Elektroblech sein und das zweite Material 9b kann beispielsweise Luft umfassen. Das zweite Material 9b kann jedoch auch jedes andere beliebige Material sein, das sich von dem ersten Material unterscheidet. Sind mehrere Aussparungen 9 in einem Polzahn ausgebildet, können alle dasselbe zweite Material 9b aufweisen. Es ist jedoch auch möglich, die verschiedenen der mehreren Aussparungen 9 mit unterschiedlichen zweiten Materialien 9b zu füllen. Dies bietet die Möglichkeit, die Permeabilität des Polzahns optimal zu beeinflussen. Auch eine einzelne Aussparung kann mit zwei verschiedenen zweiten Materialien 9b gefüllt sein, beispielsweise wenn die Aussparung 9 teilweise mit einem zweiten Festkörper und teilweise mit Luft gefüllt ist.

Die Aussparungen sind vorzugsweise gegenüber der Polzahnfläche und den Polzahnseitenflächen 18a, 18b vorzugsweise abgeschlossen. Dieses gilt insbesondere, wenn die Aussparung nicht mit einem Festkörper als zweites Material 9b gefüllt ist.

In Figur 6a ist gezeigt, dass die Aussparung 9 im Polzahn 4 in der Nähe der Pollücke 5 angeordnet ist. Damit kann erreicht werden, dass die magnetische Flussdichte im Polzahn in einem Bereich nahe der Pollücke 5 abweichend, also schlechter oder besser, geleitet wird als, bezogen auf die Umfangsrichtung, in einer Mitte 20a des Polzahns 4. Dies kommt bezüglich der effektiven Wirkung einer Variation der Permeabilität im Polzahn gleich.

Hierbei sind eine Position, eine Ausdehnung, eine Form und das zweite Material 9b der Aussparung 9 so zu gestalten, dass die magnetische Flussdichte in einem Bereich des Polzahns 4 nahe der Pollücke 5 anders geleitet wird als, bezogen auf die Umfangsrichtung, in einem Bereich um die Mitte 20a des Polzahns 4.

Jede der Aussparungen 9 kann bezüglich einer Ausdehnung, beispielsweise eine maximale Ausdehnung in der Umfangsrichtung und/oder der radialen Richtung, und dem zweitem Material 9b individuell ausgestaltet sein. Sowohl die Ausdehnung, das zweite Material 9b als auch die Position der Aussparung 9 im Polzahn 4 können als ein Teil eines Modells oder auch als ein Parameter hiervon im beanspruchten Verfahren zum Ausbilden eines Stators 2 genutzt werden. Besonders bevorzugt werden Aussparungen 9 mit einem kreisrunden Querschnitt, da diese fertigungstechnisch einfach herzustellen sind.

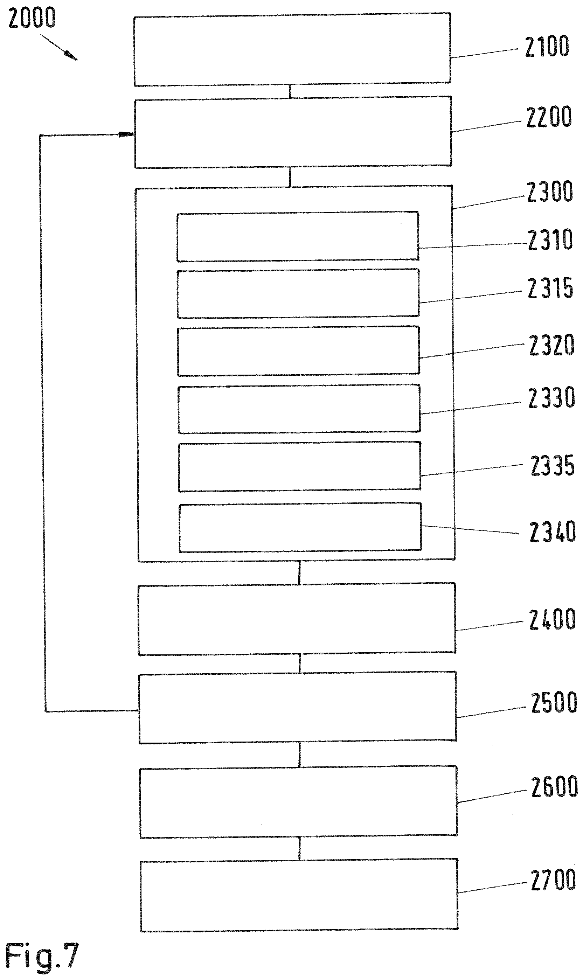

In Fig. 7 ist schematisch das Ablaufdiagramm 2000 eines Verfahrens zur Erzeugung eines aktiven Magnetlagers bzw. eines Stators für ein aktive Magnetlager exemplarisch dargestellt.

Zunächst wird ein Modell bereitgestellt oder erstellt 2100. Dieses umfasst vorzugsweise Teilmodelle, die zumindest einen Polzahn eines Stators, Abschnitte benachbarter Pollücken und einen Abschnitt eines Rotors sowie eines Spalts zwischen Rotor und Stator sowie eine Erzeugung einer magnetischen Flussdichte in dem Polzahn modellieren. Das Modell des Polzahns 6 modelliert dessen geometrische Gestalt, vorzugsweise in Form und Dimensionen, und/oder die magnetische Permeabilität des Materials des Polzahns. Das Modell kann Teilmodelle für weitere Komponenten wie beispielsweise Stützelemente, Wicklungen etc. umfassen. Vorzugsweise wird das Modell als Finite-Elemente-Modell bereitgestellt oder erstellt.

Anhand des Modells wird eine magnetische Flussdichte an der Oberfläche des Rotors in der radialen Richtung als Funktion der Position in der Umfangsrichtung berechnet 2200. Für die modellierte Gestalt des Polzahns wird vorzugsweise eine Radialflussdichtefunktion $B_R(x)$, welche eine radiale Komponente der magnetischen Flussdichte an einer dem Stator zugewandten Seite des Rotors als Funktion der Umfangsposition x in der axialen Aufnahme des Stators angibt, berechnet. Vorzugsweise wird der gesamte Stator bzw. das gesamte Magnetlager über das Modell beschrieben und die Radialflussdichtefunktion umlaufend um den Stator für einen Betriebszustand, in dem das Lager aktiv den Rotor hält, berechnet. Hierbei können Modellierungen aufgrund von Symmetrieerwägungen häufig stark vereinfacht werden.

Ausgehend hiervon wird dann eine Bewertungsfunktion berechnet 2300, die ein Maß für in dem Rotor auftretende Verluste abhängig von Änderungen des Betrags der magnetischen Flussdichte in der radialen Richtung an der Oberfläche des Rotors entlang einer Wegstrecke in der Umfangsrichtung bewertet.

Der Verfahrensschritt des Berechnens der Bewertungsfunktion kann unterschiedliche Teilschritte, die im Folgenden aufgeführt sind, umfassen.

Bei einer Ausführungsform umfasst das Berechnen der Bewertungsfunktion ein Ermitteln von Fourierkoeffizienten für mindestens eine tiefe Ortsfrequenz und für mindestens eine hohe Ortsfrequenz für die anhand der Modellierung berechnete Radialflussdichtefunktion 2310.

Das Ermitteln der Fourierkoeffizienten kann beispielsweise über ein Ausführen einer Fourier-Transformation, vorzugsweise in Form einer Fast-Fourier-Transformation, erfolgen 2315.

Fourierkoeffizienten, die zu hohen Ortsfrequenzen gehören, können mit abrupten Änderungen der magnetischen Flussdichte in der radialen Richtung assoziiert werden. Folglich gehen große Beträge von Fourierkoeffizienten für hohe Ortsfrequenzen mit hohen Verlusten in dem Blechpaket des Rotors einher.

Um die Absolutbeträge der Fourierkoeffizienten für hohe Ortsfrequenzen mit solchen Verlusten assoziieren zu können, kann es notwendig werden, diese in Beziehung zu den Absolutbeträgen von Fourierkoeffizienten für tiefe Ortsfrequenzen zu setzen.

Eine Ausführungsform des Verfahrens sieht daher vor, dass eine Bewertungsfunktion ausgewertet wird, die von den Fourierkoeffizienten abhängig ist 2320. Beispielsweise kann ein Verhältnis zwischen Fourierkoeffizienten für hohe Ortsfrequenzen und Fourierkoeffizienten für tiefe Ortsfrequenzen gebildet werden. Bei einigen Ausführungsformen wird nur ein Fourierkoeffizient für eine hohe Ortsfrequenz in Beziehung zu einem Fourierkoeffizienten für eine tiefe Ortsfrequenz gesetzt.

Bei einer anderen Ausführungsform wird eine Summe der Fourierkoeffizienten für hohe Ortsfrequenzen ins Verhältnis zu einer Summe der Fourierkoeffizienten für tiefe Ortsfrequenzen gesetzt. Bei anderen Ausführungsformen wird eine gewichtete Summe der Fourierkoeffizienten oder von Potenzen der Fourierkoeffizienten gebildet.

Bei einer anderen Ausführungsform umfasst das Berechnen der Bewertungsfunktion ein Ableiten der Radialflussdichtefunktion 2330. Treten abrupte Änderungen in der Radialflussdichte auf, so weist deren Ableitung hohe Beträge auf. Erfolgt die Änderung der Radialflussdichte weniger abrupt, beispielsweise aufgrund von ausgebildeten Vorsprüngen in den Polzahnseitenflächen, so sind die Beträge der Ableitung geringer.

Eine Ausführungsform sieht daher vor, dass das Berechnen der Bewertungsfunktion das Berechnen einer Funktion in Abhängigkeit von den Werten der Ableitung der Radialflussdichte umfasst. Beispielsweise kann eine Mittelung der Beträge der Werte der Ableitung vorgenommen werden 2335.

Bei wieder anderen Ausführungsformen wird noch mindestens eine weitere Größe anhand der Modellierung bestimmt und bei der Berechnung der Bewertungsfunktion berücksichtigt 2340.

Bei der Größe kann es sich beispielsweise um eine mechanische Vorgabe, wie beispielsweise einen Mindestabstand zwischen benachbarten Polzähnen oder ähnliche Vorgaben, handeln.

Andererseits kann es sich bei der Größe aber auch beispielsweise um die Kraft handeln, die auf den Rotor wirkt. Hierfür kann beispielsweise ein Minimalwert vorgegeben sein, damit das aktive Magnetlager einwandfrei betrieben werden kann.

Gemäß Schritt 2400 wird das Modell oder ein Parameter hiervon variiert. Beispielsweise können die geometrische Gestalt des Polzahns und/oder das Material des Polzahns und dessen Eigenschaften, insbesondere eine magnetische Permeabilität, variiert werden. Ebenso kann die Gestalt eines Stützelements und dessen Material etc. variiert werden.

Die Schritte 2200 bis 2400 werden einschließlich etwaiger Teilschritte iteriert 2500, um die Bewertungsfunktion zu optimieren, d.h. einen Extremwert der Bewertungsfunktion, gegebenenfalls unter Randbedingungen, zu ermitteln. In der Regel wird der Extremwert ein Minimalwert sein.

Hat eine Optimierung stattgefunden, so werden Informationen über den Stator, der mit dem Extremwert der Bewertungsfunktion korrespondiert, insbesondere über mindestens einen Polzahn, ausgegeben 2600.

Diese Informationen werden dann genutzt, um einen Stator bzw. ein aktives Magnetlager mit einem solchen Stator zu erzeugen 2700.

Es versteht sich für den Fachmann, dass lediglich beispielhafte Ausführungsformen angegeben sind. Erfindung wird durch die anhängigen Ansprüche definiert.

Bezugszeichen

| | |
|---|---|
| 1 | Rotor |
| 1a | Rotorblechpaket |
| 2 | Stator |
| 3 | Spalt |
| 4, 4-x | Polzahn |
| 5 | Pollücke |
| 6 | Vorsprung |
| 7 | Stützelement |
| 8 | axiale Aufnahme |
| 9 | Aussparung |
| 9a | (erstes) Material des Polzahns |
| 9b | abweichendes (zweites) Material, zum Füllen der Aussparung |
| 10 | Rotationsachse |
| 11 | radiale Richtung |
| 14, 14-x | (Mitten-)Position |
| 17 | Polzahnfläche |
| 18a, 18b | Polzahnseitenflächen |
| 19 | Zentrum der Polzahnfläche |
| 20 | Mittelebene |
| 20a | Mitte |
| 21 | Rotorpunkt |
| 24 | mittlerer Abschnitt der Polzahnfläche |
| 26 | vom Rotor abgewandte Seite des Vorsprungs |
| 28a-x, 28b-x | Positionen der Polzahnseitenflächen |
| 30 | Graph |
| 31 | radiale Komponente der magnetischen Flussdichte |
| 32 | Position entlang der Umfangsrichtung |
| 33 | maximale magnetische Flussdichte |
| 34 | minimale magnetische Flussdichte |
| 36 | Betrag der Radialkomponente der Flussdichte |
| 360 | Betrag der Radialkomponente der Flussdichte |
| 100 | aktives Magnetlager nach dem Stand der Technik |

| 1000 | aktives Magnetlager |
|---|---|
| 2000 | Ablaufdiagramm |
| 2100 | Bereitstellen/Erstellen eines Modells |
| 2200 | Berechnen der magnetischen Flussdichte |
| 2300 | Berechnen einer Bewertungsfunktion |
| 2310 | Ermitteln von Fourierkoeffizienten |
| 2315 | Ausführen einer Fast-Fourier-Transformation |
| 2320 | Berechnen einer Bewertungsfunktion, die von den Fourierkoeffizienten abhängig ist |
| 2330 | Ableiten der Radialflussdichtefunktion |
| 2335 | Mittelung der Ableitung der radialen Flussdichtefunktion |
| 2340 | Ermitteln mindestens einer weiteren Größe und Berechnen der Bewertungsfunktion abhängig von der weiteren Größe |
| 2400 | Variieren des Modells |
| 2500 | Iterieren von Verfahrensschritten zur Optimierung der Bewertungsfunktion |
| 2600 | Ausgeben von Informationen über den modellierten Stator |
| 2700 | Fertigen eines Stators oder aktiven Magnetlagers basierend auf den Informationen |

**Patentansprüche**

1. Stator (2) eines aktiven Magnetlagers (1000)

   - mit einer axialen Aufnahme (8) für einen durch einen Spalt (3) von dem Stator (2) beabstandeten Rotor (1), der zum Leiten einer magnetischen Flussdichte und zum Drehen um eine senkrecht zu einer Querschnittsfläche der axialen Aufnahme (8), in axialer Richtung angeordneten Drehachse (10) ausgebildet ist,
   - mit einem Polzahn (4), der eine Polzahnfläche (17), die einen Umfangsabschnitt der axialen Aufnahme (8) ausbildet, und zwei Polzahnseitenflächen (18a, 18b) umfasst, die den Polzahn (4) in einer Umfangsrichtung (12), welche senkrecht zur axialen Richtung orientiert ist, auf beiden Seiten jeweils gegen eine jeweils angrenzende Pollücke (5) abgrenzen, wobei der Polzahn (4) zum Leiten der magnetischen Flussdichte ausgebildet ist, sodass in einem Zentrum (19) der Polzahnfläche (17) die austretende oder eintretende magnetische Flussdichte einen maximalen Betrag in einer radialen Richtung (11) aufweist, die senkrecht zu der axialen Richtung und senkrecht zur Umfangsrichtung (12) orientiert ist, und
   - wobei ein Material des Polzahns (4) bezogen auf die Umfangsrichtung (12) eine Inhomogenität der Permeabilität aufweist,

   wobei die Permeabilität des Materials des Polzahns (4) so entlang der Umfangsrichtung (12) verteilt ist, dass die Permeabilität zumindest benachbart zu der Polzahnfläche (17) in einem Abschnitt des Polzahns (4) nahe der einen Polzahnseitenfläche oder der beiden Polzahnseitenflächen (18a, 18b) geringer ist als bezogen auf die Umfangsrichtung (12) in einem Zentrum des Polzahns (4), **dadurch gekennzeichnet, dass** der Polzahn (4) eine oder mehrere Aussparungen (9) aufweist, die jeweils mit einem Material (9b) gefüllt sind, welches sich von einem umgebenden Material (9a) des Polzahns (4) zumindest hinsichtlich der Permeabilität unterscheidet, wobei die eine oder mehreren Aussparungen jeweils als von dem Material des Polzahns zumindest jeweils in Ebenen, die senkrecht zur axialen Richtung orientiert sind, umschlossene Hohlräume beabstandet von der Polzahnfläche und optional von der Polzahnseitenfläche ausgebildet sind.

2. Stator (2) eines aktiven Magnetlagers (1000) nach Anspruch 1, **dadurch gekennzeichnet, dass** zusätzlich zu der Inhomogenität der Permeabilität des Materials eine oder beide Polzahnseitenflächen (18a, 18b) angrenzend an die dem Rotor (1) zugewandte Polzahnfläche (17) einen die jeweils angrenzende Pollücke (5) verjüngenden oder überspannenden Vorsprung (6) aufweisen.

3. Stator (2) eines aktiven Magnetlagers (1000) nach Anspruch 2, **dadurch gekennzeichnet, dass** der Vorsprung (6) einer der Polzahnseitenflächen (18a, 18b) verschieden zu einem Vorsprung (6) der jeweils anderen Polzahnseitenfläche (18a, 18b) und/oder einem Vorsprung (6) einer Polzahnseitenfläche (18a, 18b) eines weiteren angrenzenden Polzahns (4) oder eines anderen Polzahns (4) bezüglich einer geometrischen Abmessung und/oder der Inhomogenität zumindest einer radialen Komponente der Permeabilität ist.

4. Stator (2) eines aktiven Magnetlagers (1000) nach einem der Ansprüche 2 oder 3, **dadurch gekennzeichnet, dass** am Vorsprung (6) in der Pollücke ein Stützelement (7) zum Aufnehmen von auf den Vorsprung (6) einwirkenden Kräften angeordnet ist.

5. Stator (2) eines aktiven Magnetlagers (1000) nach einem der vorherigen Ansprüche, **dadurch gekennzeichnet, dass** die eine oder die mehreren Aussparungen (9) benachbart zu der oder den Polzahnseitenflächen (18a, 18b) ausgebildet sind.

6. Stator (2) eines aktiven Magnetlagers (1000) nach einem der vorherigen Ansprüche, **dadurch gekennzeichnet, dass** in der Pollücke (5) ein Abschnitt mindestens einer Wicklung zum Ausbilden der magnetischen Flussdichte in dem Polzahn (4) bei einer Bestromung der mindesten einen Wicklung angeordnet ist.

7. Aktives Magnetlager (1000) umfassend den Stator (2) nach einem der vorangehenden Ansprüche und den Rotor (1), der in der axialen Aufnahme (8) des Stators (2) beabstandet durch den Spalt (3) angeordnet ist und zum Leiten der magnetischen Flussdichte und zum Drehen um die senkrecht zu der Querschnittsfläche der axialen Aufnahme (8), in axialer Richtung angeordneten Drehachse ausgebildet ist.

8. Verfahren zum Ausbilden eines Stators (2) eines aktiven Magnetlagers (1000) nach einem der Ansprüche 1 bis 8 oder eines aktiven Magnetlagers (1000) nach Anspruch 7, umfassend die Verfahrensschritte:

   a) Bereitstellen eines Modells, welches mindestens den Polzahn (4) mit der Polzahnfläche (17) und den Polzahnseitenflächen (18a, 18b), zumindest Abschnitte der angrenzenden Pollücken (5) sowie zumindest einen Ausschnitt des durch den Spalt (3) beabstandeten Rotors (1) sowie eine Erzeugung der magnetischen Flussdichte in dem Polzahn (4) modelliert,
   b) Berechnen der magnetischen Flussdichte an der Oberfläche des Rotors (1) in der radialen Richtung (11) anhand des Modells als Funktion der Position in der Umfangsrichtung (12),
   c) Berechnen einer Bewertungsfunktion, die ein Maß für in dem Rotor (1) auftretende Verluste abhängig von Änderungen eines Betrags der magnetischen Flussdichte in der radialen Richtung (11) an der Oberfläche des Rotors (1) entlang einer Wegstrecke in der Umfangsrichtung (12) bewertet,
   d) Variieren einer Permeabilität des Materials des Polzahns (4) in dem Modell, wobei beim Variieren der Permeabilität des Materials des Polzahns (4) in dem Modell, eine oder mehrere Aussparungen (9) in dem Polzahn (4) angeordnet werden, die mit einem Material (9b) gefüllt sind, welches sich von einem umgebenden Material (9a) des Polzahns (4) zumindest hinsichtlich der Permeabilität unterscheidet, wobei die eine oder mehreren Aussparungen jeweils als von dem Material des Polzahns zumindest jeweils in Ebenen, die senkrecht zur axialen Richtung orientiert sind, umschlossene Hohlräume beabstandet von der Polzahnfläche und optional von der Polzahnseitenfläche ausgebildet sind,
   e) Ausführen der Verfahrensschritte b) bis d) iterativ zum Ermitteln eines Extremwertes der Bewertungsfunktion,
   g) Ausgeben von Informationen, die den Polzahn (4) gemäß dem Modell beschreiben, der mit dem ermittelten Extremwert der Bewertungsfunktion korrespondiert, und
   h) Ausbilden eines Stators (2) oder eines aktiven Magnetlagers (1000) mit einem Polzahn anhand der ausgegebenen Informationen, der dem Polzahn (4) gemäß dem Modell entspricht.

9. Verfahren nach Anspruch 8, **dadurch gekennzeichnet, dass** zusätzlich im Schritt d) eine geometrische Gestalt des Polzahns (4), insbesondere der Polzahnseitenfläche (18a, 18b) angrenzend an die Polzahnfläche (17) variiert wird.

10. Verfahren nach Anspruch 8 oder 9, **dadurch gekennzeichnet, dass** das Modell als Finite-Elemente-Modell bereitgestellt wird.

11. Verfahren nach einem der Ansprüche 8 bis 10, **dadurch gekennzeichnet, dass** der Verfahrensschritt Berechnen einer Bewertungsfunktion die Schritte umfasst:

    i) Berechnen eines Fourierkoeffizienten für eine hohe Ortsfrequenz und eines Fourierkoeffizienten für eine tiefe Ortsfrequenz aus dem Verlauf der magnetischen Flussdichte in der radialen Richtung (11) an der Oberfläche des Rotors (1) in der Umfangsrichtung (12),
    ii) Berechnen eines Kennwertes, der ein Verhältnis zwischen dem Fourierkoeffizienten für die hohe Ortsfrequenz und dem Fourierkoeffizienten für die tiefe Ortsfrequenz und/oder eine gewichtete Summe einer Potenz des Fourierkoeffizienten für die tiefe Ortsfrequenz und/oder einer Potenz des Fourierkoeffizienten für die hohe Ortsfrequenz enthält.

12. Verfahren nach einem der Ansprüche 8 bis 11, **dadurch gekennzeichnet, dass** der Verfahrensschritt Berechnen der Bewertungsfunktion den Schritt Berechnen einer örtlichen Ableitung des Betrags der magnetischen Flussdichte in radialer Richtung an der Oberfläche des Rotors (1) umfasst.

13. Verfahren nach Anspruch 12, wobei der Verfahrensschritt Berechnen der Bewertungsfunktion den Schritt Berechnen eines Mittelwertes einer Funktion der örtlichen Ableitung der magnetischen Flussdichte in der radialen Richtung (11) an der Oberfläche des Rotors (1) entlang einer Wegstrecke in der Umfangsrichtung umfasst.

14. Verfahren nach einem der Ansprüche 8 bis 13, wobei zusätzlich eine weitere Größe des aktiven Magnetlagers (1000) ermittelt wird, und das Ermitteln des Extremwertes der Bewertungsfunktion unter Berücksichtigung eines vorgegebenen Wertes der weiteren Größe erfolgt, wobei die weitere Größe insbesondere eine Kraft ist.

15. Verfahren nach einem der Ansprüche 8 bis 14, **dadurch gekennzeichnet, dass** eine Position und/oder eine Form und/oder eine Ausdehnung und/oder das füllende Material (9b) der einen oder mehreren Aussparungen (9) in dem Polzahn (4) variiert werden.

**Claims**

1. A stator (2) of an active magnetic bearing (1000)

   - comprising an axial receptacle (8) for a rotor (1) spaced apart from the stator (2) by a gap (3), which is configured to conduct a magnetic flux density and to rotate about an axis of rotation arranged in an axial direction perpendicular to a cross-sectional area of the axial receptacle (8)
   - comprising a pole tooth (4), which comprises a pole tooth surface (17), which forms a circumferential section of the axial receptacle (8), and two pole tooth side surfaces (18a, 18b) which delimit the pole tooth (4) in a circumferential direction (12), oriented perpendicular to the axial direction, on both sides respectively against a respective adjacent pole gap (5), wherein the pole tooth (4) is configured to conduct the magnetic flux density such that, at a centre (19) of the pole tooth surface (17), the outgoing or incoming magnetic flux density exhibits a maximum magnitude in a radial direction (11) which is oriented perpendicular to the axial direction and perpendicular to the circumferential direction (12), and
   - wherein a material of the pole tooth (4) exhibits an inhomogeneity of permeability relative to the circumferential direction (12)
   - wherein the permeability of the material of the pole tooth (4) is distributed along the circumferential direction (12) such that the permeability, at least in an area adjacent to the pole tooth surface (17), in a section of the pole tooth (4) near one pole tooth side surface or both pole tooth side surfaces (18a, 18b), is lower than at a centre of the pole tooth (4) relative to the circumferential direction (12)
   - **characterised in that** the pole tooth (4) comprises one or more recesses (9), each of which is filled with a material (9b) that differs from a surrounding material (9a) of the pole tooth (4) at least with respect to permeability, wherein the one or more recesses are each formed as cavities enclosed by the material of the pole tooth at least in planes oriented perpendicular to the axial direction, spaced apart from the pole tooth surface and optionally from the pole tooth side surfaces.

2. A stator (2) of an active magnetic bearing (1000) according to claim 1, **characterised in that**, in addition to the inhomogeneity of the material's permeability, one or both pole tooth side surfaces (18a, 18b) adjacent to the pole tooth surface (17) facing the rotor (1) feature a projection (6) which tapers or spans the respective adjacent pole gap (5).

3. A stator (2) of an active magnetic bearing (1000) according to claim 2, **characterised in that** the projection (6) of one of the pole tooth side surfaces (18a, 18b) differs from a projection (6) of the respective other pole tooth side surface (18a, 18b) and/or a projection (6) of a pole tooth side surface (18a, 18b) of a further adjacent pole tooth (4) or of another pole tooth (4) with regard to a geometric dimension and/or the inhomogeneity of at least one radial component of the permeability.

4. A stator (2) of an active magnetic bearing (1000) according to one of claims 2 or 3, **characterised in that** a support element (7) for absorbing forces acting on the projection (6) is arranged on the projection (6) in the pole gap.

5. Stator (2) of an active magnetic bearing (1000) according to one of the preceding claims, **characterised in that** the one or more recesses (9) are formed adjacent to one or more pole tooth side surfaces (18a, 18b).

6. A stator (2) of an active magnetic bearing (1000) according to one of the preceding claims, **characterised in that** a section of at least one winding is arranged in the pole gap (5) to generate the magnetic flux density in the pole tooth (4) when the at least one winding is energised.

7. Active magnetic bearing (1000) comprising the stator (2) according to one of the preceding claims and the rotor (1), which is arranged in the axial receptacle (8) of the stator (2) spaced apart by the gap (3) and is configured to conduct the magnetic flux density and to rotate about the axis of rotation arranged in the axial direction, perpendicular to the cross-sectional area of the axial receptacle (8).

8. A method for forming a stator (2) of an active magnetic bearing (1000) according to any one of claims 1 to 8, or an active magnetic bearing (1000) according to claim 7, comprising the steps of:

a) providing a model which models at least the pole tooth (4) with the pole tooth surface (17) and the pole tooth side surfaces (18a, 18b), at least sections of the adjacent pole gaps (5) and at least a section of the rotor (1) spaced apart by the gap (3), as well as the generation of the magnetic flux density in the pole tooth (4),
b) calculating the magnetic flux density at the surface of the rotor (1) in the radial direction (11) using the model as a function of position in the circumferential direction (12),
c) calculating an evaluation function that evaluates a measure of losses occurring in the rotor (1) as a function of changes in a magnitude of the magnetic flux density in the radial direction (11) at the surface of the rotor (1) along a path in the circumferential direction (12),
d) varying a permeability of the material of the pole tooth (4) in the model, wherein, when varying the permeability of the material of the pole tooth (4) in the model, one or more recesses (9) are arranged in the pole tooth (4), which are filled with a material (9b) that differs from a surrounding material (9a) of the pole tooth (4) at least in terms of permeability, wherein the one or more recesses are each formed as cavities enclosed by the material of the pole tooth at least in planes oriented perpendicular to the axial direction, spaced apart from the pole tooth surface and optionally from the pole tooth side surface,
e) performing the method steps b) to d) iteratively to determine an extreme value of the evaluation function
g) Outputting information describing the pole tooth (4) according to the model, which corresponds to the determined extreme value of the evaluation function, and
h) forming a stator (2) or an active magnetic bearing (1000) with a pole tooth based on the outputted information, which corresponds to the pole tooth (4) according to the model.

9. A method according to claim 8, **characterised in that**, additionally in step d), a geometric shape of the pole tooth (4), in particular of the pole tooth side surface (18a, 18b) adjacent to the pole tooth surface (17), is varied.

10. A method according to claim 8 or 9, **characterised in that** the model is provided as a finite element model.

11. A method according to any one of claims 8 to 10, **characterised in that** the method step of calculating an evaluation function comprises the steps of:

i) calculating a Fourier coefficient for a high spatial frequency and a Fourier coefficient for a low spatial frequency from the profile of the magnetic flux density in the radial direction (11) at the surface of the rotor (1) in the circumferential direction (12),
ii) calculating a characteristic value comprising a ratio between the Fourier coefficient for the high spatial frequency and the Fourier coefficient for the low spatial frequency and/or a weighted sum of a power of the Fourier coefficient for the low spatial frequency and/or a power of the Fourier coefficient for the high spatial frequency.

12. A method according to any one of claims 8 to 11, **characterised in that** the method step of calculating the evaluation function comprises the step of calculating a local derivative of the magnitude of the magnetic flux density in the radial direction at the surface of the rotor (1).

13. A method according to claim 12, wherein the method step of calculating the evaluation function comprises the step of calculating a mean value of a function of the local derivative of the magnetic flux density in the radial direction (11) at the surface of the rotor (1) along a path in the circumferential direction.

14. A method according to any one of claims 8 to 13, wherein a further parameter of the active magnetic bearing (1000) is additionally determined, and the determination of the extreme value of the evaluation function is carried out taking into account a predetermined value of the further parameter, wherein the further parameter is, in particular, a force.

15. A method according to any one of claims 8 to 14, **characterised in that** a position and/or a shape and/or an extent and/or the filling material (9b) of the one or more recesses (9) in the pole tooth (4) is varied.

**Revendications**

1. Stator (2) d'un palier magnétique actif (1000)

   - avec un logement axial (8) pour un rotor (1) espacé du stator (2) par un entrefer (3), lequel rotor est conçu pour conduire une densité de flux magnétique et pour tourner autour d'un axe de rotation (10) agencé dans la direction axiale, perpendiculairement à une surface de section transversale du logement axial (8),
   - avec une dent polaire (4), qui comprend une surface de dent polaire (17), laquelle forme une section circonférentielle du logement axial (8), et deux surfaces latérales de dent polaire (18a, 18b), qui délimitent la dent polaire (4) dans une direction circonférentielle (12), orientée perpendiculairement à la direction axiale, des deux côtés chacune par rapport à une encoche polaire adjacente (5) respective, la dent polaire (4) étant conçue pour conduire la densité de flux magnétique, de telle sorte que, dans un centre (19) de la surface de dent polaire (17), la densité de flux magnétique sortante ou entrante présente une quantité maximale dans une direction radiale (11), laquelle est orientée perpendiculairement à la direction axiale et perpendiculairement à la direction circonférentielle (12), et
   - un matériau de la dent polaire (4) présentant une inhomogénéité de la perméabilité par rapport à la direction circonférentielle (12),

     la perméabilité du matériau de la dent polaire (4) étant répartie le long de la direction circonférentielle (12) de telle sorte que la perméabilité est, au moins au voisinage de la surface de dent polaire (17), dans une section de la dent polaire (4) proche de l'une des surfaces latérales de dent polaire ou des deux surfaces latérales de dent polaire (18a, 18b), inférieure à celle dans un centre de la dent polaire (4) par rapport à la direction circonférentielle (12),
     **caractérisé en ce que**
     la dent polaire (4) présente un ou plusieurs évidements (9) qui sont chacun remplis d'un matériau (9b) qui diffère d'un matériau environnant (9a) de la dent polaire (4) au moins en ce qui concerne la perméabilité, les un ou plusieurs évidements chacun formés comme des cavités entourées par le matériau de la dent polaire au moins respectivement dans des plans qui sont orientés perpendiculairement à la direction axiale, à distance de la surface de dent polaire et éventuellement de la surface latérale de dent polaire.

2. Stator (2) d'un palier magnétique actif (1000) selon la revendication 1, **caractérisé en ce qu'**en plus de l'inhomogénéité de la perméabilité du matériau, l'une ou les deux surfaces latérales de dent polaire (18a, 18b) présentent, de manière adjacente à la surface de dent polaire (17) tournée vers le rotor (1), une saillie (6) rétrécissant ou s'étendant sur l'encoche polaire (5) adjacente respective.

3. Stator (2) d'un palier magnétique actif (1000) selon la revendication 2, **caractérisé en ce que** la saillie (6) de l'une des surfaces latérales de dent polaire (18a, 18b) est différente d'une saillie (6) de l'autre surface latérale de dent polaire (18a, 18b) et/ou d'une saillie (6) d'une surface latérale de dent polaire (18a, 18b) d'une dent polaire adjacente supplémentaire (4) ou d'une autre dent polaire (4), en ce qui concerne une dimension géométrique et/ou l'inhomogénéité d'au moins une composante radiale de la perméabilité.

4. Stator (2) d'un palier magnétique actif (1000) selon l'une des revendications 2 ou 3, **caractérisé en ce qu'**un élément de support (7) est agencé sur la saillie (6) dans l'encoche polaire pour absorber les forces s'exerçant sur la saillie (6).

5. Stator (2) d'un palier magnétique actif (1000) selon l'une des revendications précédentes, **caractérisé en ce que** les un ou plusieurs évidements (9) sont formés au voisinage de la ou des surfaces latérales de dent polaire (18a, 18b).

6. Stator (2) d'un palier magnétique actif (1000) selon l'une des revendications précédentes, **caractérisé en ce qu'**une section d'au moins un enroulement est agencée dans l'encoche polaire (5) pour former la densité de flux magnétique dans la dent polaire (4) lors d'une alimentation en courant de l'au moins un enroulement.

7. Palier magnétique actif (1000) comprenant le stator (2) selon l'une des revendications précédentes et le rotor (1), qui est agencé espacé du stator (2) par l'entrefer (3) dans le logement axial (8) et qui est conçu pour conduire la densité de flux magnétique et pour tourner autour de l'axe de rotation agencé dans la direction axiale, perpendiculairement à la surface de section transversale du logement axial (8).

8. Procédé de formation d'un stator (2) d'un palier magnétique actif (1000) selon l'une des revendications 1 à 8 ou d'un palier magnétique actif (1000) selon la revendication 7, comprenant les étapes de procédé suivantes :

a) la fourniture d'un modèle qui modélise au moins la dent polaire (4) avec la surface de dent polaire (17) et les surfaces latérales de dent polaire (18a, 18b), au moins des sections des encoches polaires (5) adjacentes ainsi qu'au moins une découpe du rotor (1) espacé par l'entrefer (3) ainsi qu'une génération de la densité de flux magnétique dans la dent polaire (4),

b) le calcul de la densité de flux magnétique à la surface du rotor (1) dans la direction radiale (11) à l'aide du modèle en fonction de la position dans la direction circonférentielle (12),

c) le calcul d'une fonction d'évaluation qui évalue une mesure des pertes se produisant dans le rotor (1) en fonction de modifications d'une quantité de la densité de flux magnétique dans la direction radiale (11) à la surface du rotor (1) le long d'un trajet dans la direction circonférentielle (12),

d) la variation d'une perméabilité du matériau de la dent polaire (4) dans le modèle ; lors de la variation de la perméabilité du matériau de la dent polaire (4) dans le modèle, un ou plusieurs évidements (9) étant agencés dans la dent polaire (4), lesquels sont remplis d'un matériau (9b) qui diffère d'un matériau environnant (9a) de la dent polaire (4) au moins en ce qui concerne la perméabilité, les un ou plusieurs évidements étant chacun formés comme des cavités entourées par le matériau de la dent polaire au moins respectivement dans des plans qui sont orientés perpendiculairement à la direction axiale, à distance de la surface de dent polaire et éventuellement de la surface latérale de dent polaire,

e) la réalisation des étapes de procédé b) à d) de manière itérative pour déterminer une valeur extrême de la fonction d'évaluation,

g) l'émission d'informations qui décrivent la dent polaire (4) selon le modèle, qui correspond à la valeur extrême déterminée de la fonction d'évaluation, et

h) la formation d'un stator (2) ou d'un palier magnétique actif (1000) avec une dent polaire à l'aide des informations émises, qui correspond à la dent polaire (4) selon le modèle.

9. Procédé selon la revendication 8, **caractérisé en ce qu'**une configuration géométrique de la dent polaire (4), notamment de la surface latérale de dent polaire (18a, 18b) adjacente à la surface de dent polaire (17), est en outre variée à l'étape d).

10. Procédé selon la revendication 8 ou 9, **caractérisé en ce que** le modèle est fourni sous la forme d'un modèle d'éléments finis.

11. Procédé selon l'une des revendications 8 à 10, **caractérisé en ce que** l'étape de procédé de calcul d'une fonction d'évaluation comprend les étapes suivantes :

i) le calcul d'un coefficient de Fourier pour une fréquence spatiale élevée et d'un coefficient de Fourier pour une fréquence spatiale basse à partir de l'évolution de la densité de flux magnétique dans la direction radiale (11) à la surface du rotor (1) dans la direction circonférentielle (12),

ii) le calcul d'une valeur caractéristique, qui comprend un rapport entre le coefficient de Fourier pour la fréquence spatiale élevée et le coefficient de Fourier pour la fréquence spatiale basse et/ou une somme pondérée d'une puissance du coefficient de Fourier pour la fréquence spatiale basse et/ou d'une puissance du coefficient de Fourier pour la fréquence spatiale élevée.

12. Procédé selon l'une des revendications 8 à 11, **caractérisé en ce que** l'étape de procédé de calcul de la fonction d'évaluation comprend l'étape de calcul d'une dérivée locale de la quantité de la densité de flux magnétique dans la direction radiale à la surface du rotor (1).

13. Procédé selon la revendication 12, l'étape de procédé de calcul de la fonction d'évaluation comprenant l'étape de calcul d'une valeur moyenne d'une fonction de la dérivée locale de la densité de flux magnétique dans la direction radiale (11) à la surface du rotor (1) le long d'un trajet dans la direction circonférentielle.

14. Procédé selon l'une des revendications 8 à 13, une grandeur supplémentaire du palier magnétique actif (1000) étant en outre déterminée, et la détermination de la valeur extrême de la fonction d'évaluation s'effectuant en tenant compte d'une valeur prédéfinie de la grandeur supplémentaire, la grandeur supplémentaire étant notamment une force.

15. Procédé selon l'une des revendications 8 à 14, **caractérisé en ce qu'**une position et/ou une forme et/ou une extension et/ou le matériau de remplissage (9b) des un ou plusieurs évidements (9) dans la dent polaire (4) sont variés.

Fig.1

Fig.2

Fig.3

Fig.4

Fig.5

Fig.6

Fig.6a

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5142175 A
- EP 2148103 A1
- DE 2338307 A1
- US 6885127 B1
- US 6194800 B1
- EP 1411255 A1
- US 20170288476 A1
- DE 19843522 A1
- US 7579723 B2
- US 20210013771 A
- WO 2014048464 A1